# EUROPÄISCHE PATENTANMELDUNG

(11) **EP 4 446 260 A1**
(43) Veröffentlichungstag der Anmeldung: **16.10.2024**
(21) Anmeldenummer: 23217487.0
(22) Anmeldetag: 18.12.2023
(51) Int. Cl.: B65G 21/10, B65G 41/00, B65G 47/08, B65G 57/10, B65G 57/112, B65G 57/24, B65G 57/03

(54) **PALETTIERVORRICHTUNG UND VERFAHREN ZUM STAPELN UND/ODER PALETTIEREN VON PALETTIERTIERFÄHIGEN STÜCKGUTLAGEN**

(30) Priorität: 12.04.2023 DE 102023109236
(71) Anmelder: Krones Aktiengesellschaft, 93073 Neutraubling (DE)
(72) Erfinder: KIRZINGER, Johannes, 93073 Neutraubling (DE); WINZINGER, Frank, 93073 Neutraubling (DE)
(74) Vertreter: Benninger, Johannes

(57) **Zusammenfassung**

Die Erfindung betrifft eine Palettiervorrichtung (20) für Stückgutlagen (31) und ein Verfahren zum Stapeln und/oder Palettieren von palettierfähigen Stückgutlagen (31). Die Palettiervorrichtung (20) umfasst eine Gruppierstation (11), eine Beladestation (22) und einen Ablageplatz (23). Die Gruppierstation ist zur Ausbildung einer palettierfähigen Stückgutlage (31) aus einer Mehrzahl von Stückgütern ausgebildet. Die Gruppierstation (11) umfasst eine Transporteinrichtung (21) mit einer Transportfläche für die Stückgüter. Die Beladestation (22) ist zur Übernahme von vollständigen Stückgutlagen (31) der Gruppierstation (11) und zur Ablage der vollständigen Stückgutlagen (31) an einer Ablageposition (25) am Ablageplatz (23) ausgebildet. Die Gruppierstation (11) ist zumindest bereichsweise höhenverstellbar ausgebildet, insbesondere ist die Transporteinrichtung (21) der Gruppierstation (11) zumindest bereichsweise höhenverstellbar ausgebildet.

## Beschreibung

Die vorliegende Erfindung betrifft eine Palettiervorrichtung und ein Verfahren zum Stapeln und/oder Palettieren von palettierfähigen Stückgutlagen.

Gleichartige oder gleichartig geformte Artikel wie insbesondere Getränkebehälter werden zum Lagern und/oder Transportieren oder auch für einen Verkauf häufig in einer Mehrzahl zusammengestellt, und diese Mehrzahl von Artikeln wird mit einer Umverpackung zu einem Gebinde zusammengefasst. Als Umverpackung findet beispielsweise eine Schrumpffolie, eine Umreifung aus Kunststoff, Papier, einem Verbundmaterial o.ä., eine Kartonumverpackung etc. Verwendung. Mehrere solcher Gebinde bzw. Verpackungseinheiten können anschließend als palettierfähige Lage angeordnet und die solchermaßen gebildeten palettierfähigen Lagen auf Paletten übereinandergestapelt werden.

Die palettierfähigen Lagen werden in der Regel vor dem Übereinanderstapeln zentriert, damit eine exakte Anordnung und/oder Ausrichtung auf den Paletten erfolgt und somit stabile Palettenstapel erzeugt werden.

Für die Stapelung oder Palettierung von Gebinden, Stückgütern oder Paketen können Beladeeinrichtungen wie bspw. Jalousie- oder sog. Plattengreiferköpfe o. dgl. eingesetzt werden. Ein solcher Greiferkopf, der als Beladeeinrichtung dienen kann, geht bspw. aus der DE 10 2010 048 524 A1 hervor. Hierbei werden üblicherweise vollständige Lagen nacheinander von einer Förderstrecke oder einer definierten Übergabestelle mit der Beladeeinrichtung aufgenommen und anschließend auf einem vorgesehenen Ablageplatz wie bspw. einer Palette o. dgl. gestapelt.

Die Offenlegungsschrift DE 10 2013 108 231 A1 beschreibt ein Verfahren und eine Vorrichtung zum Stapeln und/oder Palettieren von Gebinde- oder Stückgutlagen, wobei vollständige Lagen nacheinander von einer Förderstrecke und/oder einer Übergabestation mittels einer Beladeeinrichtung aufgenommen und durch seitliche Zustell- und/oder Schiebebewegungen vorzentriert und anschließend auf einem vorgesehenen Ablageplatz gestapelt werden. Nach dem Ablegen der Gebinde- oder Stückgutlagen erfolgt ein Nachzentrieren durch erneute seitliche Zustell- und/oder Schiebebewegungen von innerhalb der Beladeeinrichtung angeordneten Schubelementen, wodurch die auf dem Ablageplatz abgelegte(n) eine oder mehrere übereinander befindliche vollständige Lage(n) in eine definierte Position auf dem Ablageplatz und/oder zur Positionierung gegenüber einer zuvor gestapelten Gebinde- oder Stückgutlage aneinandergeschoben und nachzentriert werden.

In jedem Fall ist es notwendig, dass die jeweilig mit einer Stückgutlage bestückte Beladeeinrichtung auf eine entsprechende Höhe gebracht wird, um die Stückgutlage in entsprechender Stapelhöhe auf der Palette bzw. auf der obersten Stückgutlage eines auf der Palette angeordneten Stapels von Stückgutlagen anzuordnen.

Eine Aufgabe der vorliegenden Erfindung besteht darin, die Palettierung von Stückgutlagen zu optimieren.

Die obige Aufgabe wird durch eine Palettiervorrichtung und ein Verfahren zum Stapeln und/oder Palettieren von palettierfähige Lagen bzw. palettierfähigen Stückgutlagen gelöst, die die Merkmale in den unabhängigen Ansprüchen umfassen. Weitere vorteilhafte Ausgestaltungen werden durch die jeweiligen abhängigen Ansprüche beschrieben.

Die Erfindung betrifft eine Palettiervorrichtung für palettierfähige Lagen bzw. Stückgutlagen, welche Palettiervorrichtung eine Gruppierstation, eine Beladeeinrichtung und einen Ablageplatz umfasst.

Die Gruppierstation ist zur Ausbildung einer palettierfähigen Stückgutlage aus einer Mehrzahl von Stückgütern ausgebildet und umfasst eine Transporteinrichtung mit einer Transportfläche für die Stückgüter. In einem Teilbereich der Transportfläche der Gruppierstation, bevorzugt in einem Endbereich der Transportfläche, können vollständige Stückgutlagen transportiert werden. Der Einfachheit halber ist im Folgenden bzgl. der Gruppierstation meistens nur von Stückgütern die Rede, auch dann, wenn die Stückgutlage schon fertiggestellt ist.

Die Beladeeinrichtung ist zur Übernahme von vollständigen Stückgutlagen von der Gruppierstation und zur Ablage der vollständigen Stückgutlagen an einer Ablageposition am Ablageplatz ausgebildet. Die Beladeeinrichtung ist in Transportrichtung gesehen insbesondere zwischen der Transporteinrichtung der Gruppierstation und dem Ablageplatz für die zu stapelnden Stückgutlagen angeordnet.

Erfindungsgemäß ist vorgesehen, dass die Gruppierstation zumindest bereichsweise höhenverstellbar ausgebildet ist. Besonders bevorzugt kann vorgesehen sein, dass die Transporteinrichtung der Gruppierstation zumindest bereichsweise höhenverstellbar ausgebildet ist.

Zum Erstellen der Stückgutlage kann die Gruppierstation mindestens einen geeigneten Manipulator umfassen, der die in mindestens einer Reihe oder im Massenstrom zugeführten Stückgüter einzeln und/oder in Gruppen erfasst und in eine Position gemäß dem vorgegebenen Lagenschema für die Stückgutlage verbringt. Hierbei kann ein Anheben der Stückgüter und/oder ein Verschieben der Stückgüter und/oder ein Verdrehen der Stückgüter vorgesehen sein. Je nach dem gewünschten Lagenschema kann es vorkommen, dass auch manche Stückgüter, welche Teil einer Lage bilden, die Gruppierstation nur durchlaufen und insbesondere hierbei nicht erfasst und manipuliert werden.

Insbesondere werden die Stückgüter hierbei mit einer gegenüber der Geschwindigkeit der Transporteinrichtung der Gruppierstation erhöhten Geschwindigkeit bewegt. Beim Verschieben der Stückgüter kann dies fluchtend zur Einlaufrichtung oder Transportrichtung der Stückgüter in die Gruppierstation erfolgen. Zusätzlich kann vorgesehen sein, dass die Stückgüter hierbei zusätzlich seitlich gegenüber der Einlaufrichtung oder Transportrichtung verschoben werden.

Gemäß einer Ausführungsform ist die Beladeeinrichtung zur Übernahme von vollständigen Stückgutlagen von einer Aufnahmeposition der Gruppierstation und zur Ablage der vollständigen Stückgutlagen an einer Ablageposition am Ablageplatz ausgebildet. Beispielsweise ist die Beladeeinrichtung zur Übernahme von vollständigen Stückgutlagen von einer Aufnahmeposition auf der Transporteinrichtung der Gruppierstation ausgebildet.

Alternativ kann die Aufnahmeposition auch einer Fördereinrichtung der Gruppierstation nachgeordnet sein, beispielsweise indem die Stückgutlage von der Fördereinrichtung der Gruppierstation in die Beladeeinrichtung eingefahren oder eingeschoben o.ä. wird. Insbesondere kann vorgesehen sein, dass die Stückgutlage von der Fördereinrichtung der Gruppierstation in eine Transfereinrichtung oder Transfereinheit der Beladeeinrichtung eingefahren oder eingeschoben o.ä. wird.

Allgemein gesagt kann die Aufnahmeposition in einem Endbereich der Gruppierstation angeordnet sein.

Gemäß manchen Ausführungsformen kann es vorkommen, dass lediglich Teillagen von der Beladeeinrichtung übernommen werden. In dem Fall kann es sein, dass auch die Gruppierstation lediglich Teillagen herstellt und insbesondere verdichtet, alternativ kann die Gruppierstation ganze Lagen herstellen und die Beladestation kann pro Arbeitszyklus bzw. Absetzvorgang nur einen Teil der Stückgüter von einer ganzen Lage übernehmen.

Eine Ausführungsform kann vorsehen, dass zwischen der Transporteinrichtung der Gruppierstation und der Beladeeinrichtung eine zusätzliche Transferstation vorgesehen ist, welche Transferstation zur Übernahme von vollständigen Stückgutlagen von der Transporteinrichtung, zum Transport und zur Übergabe der aufgenommenen Stückgutlagen an die Beladeeinrichtung ausgebildet ist. Nachfolgend wird die von der Beladeeinrichtung aufgenommene Stückgutlage durch die Beladeeinrichtung an der Ablageposition am Ablageplatz abgelegt.

Bei der Beladeeinrichtung kann es sich beispielsweise um eine Beladesäule mit einem an der Beladesäule mehrachsig verfahrbarem Beladekopf handeln, welcher nachfolgend auch allgemein als Transfereinheit bezeichnet wird. Die Beladeeinrichtung umfasst beispielsweise eine Hubsäule und einen an der Hubsäule angeordneten höhenverstellbaren Querbalken. An dem Querbalken ist eine Transfereinheit angeordnet, wobei die Transfereinheit insbesondere schiebebeweglich an dem horizontal ausgerichteten Querbalken angeordnet ist.

Die palettierfähige Lage bzw. Stückgutlage wird durch die Transfereinheit der Beladeeinrichtung aus der Gruppierstation aufgenommen und zur Ablageposition überführt. Hierbei kann die Transfereinheit am Querbalken in Richtung der Ablageposition bewegt werden. Diese lineare Bewegung kann zusätzlich durch eine Höhenverstellung des Querbalkens an der Hubsäule überlagert werden, um die korrekte Höhe der Ablageposition am Ablageplatz zu erreichen.

Gemäß einer alternativen Ausführungsform kann die Transfereinheit lediglich einachsig verfahrbar an einer Hubsäule angeordnet sein.

Eine der vorbeschriebenen Ausführungsformen der Transfereinheit kann ebenso an der o.g. optionalen Transferstation angeordnet sein, vorzugsweise ohne Ablagefunktion, sondern mit einer Überschubfunktion bzw. Übergabefunktion zur Transfereinheit der Beladeeinrichtung.

Die Transfereinheit kann in einer ersten Ausführungsform eine Auflagefläche aufweisen, auf welcher Auflagefläche eine Stückgutlage während des Transports zum Stapel steht.

Die Transfereinheit kann bei dieser Ausführungsform mindestens ein Transportmittel umfassen, durch welches die Stückgutlagen relativ zu einem Gestell der Transfereinheit bewegbar sind. Das Transportmittel kann z.B. einen Schieber und/oder ein Förderband umfassen. Im Fall des Förderbandes ist die Auflagefläche gleich das Transportmittel bzw. Teil davon.

In der ersten Ausführungsform der Transfereinheit ist es möglich, dass die Transfereinheit zur Aufnahme der Stückgutlage im Wesentlichen fluchtend in Transportrichtung hinter der Gruppierstation positioniert wird, insbesondere fluchtend mit den jeweiligen Auflage- bzw. Transportflächen. So ist es beispielsweise möglich, dass ein Bügel der Transfereinheit hinter der Stückgutlage positioniert wird und horizontal in die Transfereinheit "hereinzieht" oder dass ein an der Gruppierstation angeordneter Schieber die Stückgutlage in die Transferstation horizontal abschiebt oder dass die Stückgutlage durch einen Förderer der Gruppierstation so beschleunigt wird, dass sie erst wieder in der Transfereinheit zum Stehen kommt.

Allgemein gesagt kann die Aufnahmeposition somit auch benachbart zu bzw. in der Nähe eines nachfolgend beschriebenen ersten Teilbereichs der Gruppierstation angeordnet sein.

In der ersten Ausführungsform der Transfereinheit ist es alternativ möglich, dass die Transfereinheit einen Aufwälzgreifer aufweist. Dieser kann auf der Gruppierstation positioniert werden und die Stückgutlage nach oben abheben. Hierzu werden die Stückgüter nach und nach an eine kleine Walze an der Kante der Auflagefläche gedrückt und durch die Walze auf das Niveau der Auflagefläche gehoben.

In der ersten Ausführungsform kann die Auflagefläche zweigeteilt ausgebildet sein, um beispielsweise Kaminlagen ablegen zu können.

Die Transfereinheit kann in einer zweiten Ausführungsform Greifer aufweisen.

Die Greifer können zum Beispiel eine Stückgutlage mittels einer im Wesentlichen horizontalen Zustellbewegung von mindestens zwei, bevorzugt von vier Seiten, einklemmen und kraftschlüssig anheben. Alternativ können die Greifer formschlüssig in Aussparungen oder unter die Unterseiten der Stückgüter eingreifen und diese anheben, z.B. bei als Kästen ausgebildeten Stückgütern.

Eine bevorzugte Ausführungsform kann vorsehen, dass die palettierfähigen Lagen bzw. Stückgutlagen auf einer am Ablageplatz angeordneten Palette angeordnet werden. Insbesondere ist vorgesehen, dass eine Mehrzahl von Stückgutlagen auf der am Ablageplatz angeordneten Palette aufeinandergestapelt werden. Die Ablageposition ergibt sich dann durch die Anzahl der bereits an dem Ablageplatz angeordneten bzw. übereinandergestapelten palettierfähigen Lagen bzw. Stückgutlagen. Aufgrund der zunehmenden Stapelhöhe ändert sich die Ablageposition, also insbesondere ändert sich die Höhe, in welcher die Stückgutlage abgesetzt werden muss.

Eine Ausführungsform der Erfindung kann vorsehen, dass die Gruppierstation einen Verdichtungsbereich umfasst, wobei zumindest der Verdichtungsbereich höhenverstellbar ausgebildet ist. Vorzugsweise wird der Verdichtungsbereich durch einen Bereich der Transporteinrichtung gebildet. Es kann aber auch vorgesehen sein, dass der Verdichtungsbereich durch einen eigenen Förderbereich gebildet wird, welcher sich fluchtend an die Transporteinrichtung der Gruppierstation anschließt.

In dem Verdichtungsbereich können vor der Palettierung noch Lücken zwischen den die palettierfähigen Lagen bzw. Stückgutlagen bildenden Stückgütern entfernt werden. Insbesondere ist der Verdichtungsbereich dazu ausgebildet, die zu einer vollständigen Stückgutlage zusammengestellten Stückgüter in Transportrichtung und/oder senkrecht zur Transportrichtung gegeneinander aufzustauen und/oder zu verdichten.

Beispielsweise umfasst der Verdichtungsbereich einen ersten Anschlagbalken, welcher sich quer zur Transportrichtung oberhalb der Transporteinrichtung erstreckt. Die die palettierfähigen Lagen bzw. Stückgutlagen bildenden Stückgüter werden gegen diesen ersten Anschlagbalken gefahren, wodurch eine Verdichtung der Stückgutlage in Transportrichtung stattfindet. Der Anschlagbalken kann im Anschluss an die erfolgte Verdichtung aus dem Transportweg der fertigen Stückgutlage durch Herausschwenken oder Absenken oder nach oben Wegheben o.ä. entfernt werden.

Weiterhin kann ein zweiter Schiebebalken vorgesehen sein, der sich ebenfalls quer zur Transportrichtung erstreckt und sich an die hintere Reihe der Stückgüter der palettierfähigen Lage bzw. Stückgutlage anlegt und dadurch das Zusammenschieben der Stückgüter in Transportrichtung unterstützt. Der Schiebebalken kann im Anschluss an die erfolgte Verdichtung aus dem Transportweg einer nachfolgend transportierten weiteren Stückgutlage durch Herausschwenken oder Absenken oder nach oben Wegheben o.ä. entfernt werden.

Gemäß einer Ausführungsform können die Stückgüter im Verdichtungsbereich gegen einen Anschlag oder Anschlagbalken gefahren werden und ein Schiebebalken schiebt die Stückgüter einzeln, reihenweise oder lagenweise in einer im Wesentlichen senkrecht zur vorherigen Transportrichtung stehenden anschließenden Transportrichtung ab, insbesondere parallel zu dem Anschlag oder Anschlagbalken.

Weiterhin können im Verdichtungsbereich seitlich zustellbare Verdichtungselemente vorgesehen sein, welche parallel zur Transportrichtung ausgerichtet und angeordnet sind. Durch einen Zustellbewegung der seitlichen Verdichtungselemente gegeneinander, werden die Stückgüter innerhalb der Stückgutlage orthogonal zur Transportrichtung zusammengeschoben.

Bei der zumindest bereichsweise Höhenverstellung innerhalb der Gruppierstation wird eine Höhe eines höhenverstellbaren Bereichs an eine Höhe der Ablageposition am Ablageplatz angepasst, um den Hub für die Beladeeinrichtung zu verringern oder zu minimieren. Insbesondere wird eine Höhe der Aufnahmeposition der Stückgutlage an die Höhe der Ablageposition angepasst.

Vorzugsweise umfasst die Palettiervorrichtung hierfür eine Steuerungseinrichtung, welche Steuerungseinrichtung Informationen zur Bildung eines Stapels aus palettierfähigen Stückgutlagen umfasst. Weiterhin ist die Steuerungseinrichtung vorzugsweise dazu ausgebildet ist, mindestens eine Einstelleinrichtung zur Einstellung der Höhe des höhenverstellbaren Bereichs der Gruppierstation gemäß der innerhalb der Steuerungseinrichtung abgespeicherten Informationen anzusteuern.

Alternativ oder zusätzlich kann die Palettiervorrichtung mindestens einen Sensor umfassen, welcher Sensor dazu ausgebildet ist, Daten zur Höhe eines am Ablageplatz erzeugten Stapels von Stückgutlagen zu erfassen und an die Steuerungseinrichtung zu übermitteln. In diesem Fall ist die Steuerungseinrichtung dazu ausgebildet, mindestens eine Einstelleinrichtungen zur Einstellung der Höhe des höhenverstellbaren Bereichs der Gruppierstation gemäß den sensorisch ermittelten Daten anzusteuern.

Hierbei kann die Einstellung gemäß einem in der Steuerungseinrichtung bereitgestellten Programm erfolgen.

Hierzu steuert die Steuerungseinrichtung geeignete Einstelleinrichtungen an, welche Einstelleinrichtungen einen Antrieb umfassen können, wobei der Antrieb beispielsweise durch einen oder mehrere Hydraulikzylinder oder Pneumatikzylinder oder durch eine oder mehrere motorische Verstellungen, beispielsweise über eine Gewindespindel o.ä., gebildet ist/sind.

Eine Ausführungsform der Erfindung sieht vor, dass die Transporteinrichtung der Gruppierstation mindestens zwei verstellbare Teilbereiche aufweist, insbesondere einen ersten Teilbereich umfassend den höhenverstellbaren Bereich der Gruppierstation und einen zweiten angleichenden Teilbereich.

Gemäß einer besonders bevorzugten Ausführungsform umfasst der erste Teilbereich den höhenverstellbaren Verdichtungsbereich der Gruppierstation.

Bevorzugt erfolgt die Höhenverstellung im ersten Teilbereich derart, dass die Transportfläche für die Stückgüter nach der Verstellung eine horizontale Fläche bildet, währen die Höhenverstellung im zweiten Teilbereich derart erfolgt, dass die Transportfläche für die Stückgüter eine gegenüber einer Horizontalen geneigte Fläche bilden kann. Insbesondere kann der zweite angleichende Teilbereich in mindestens einer Arbeitsposition in einer Neigung gegenüber einer Horizontalfläche angeordnet sein.

Es ist aber auch mindestens eine Arbeitsposition möglich, bei der der zweite angleichende Teilbereich ebenfalls eine Horizontalfläche ausbildet. Im geneigten Zustand kann die Transportfläche in einem Winkel zwischen 1° und 89° zu einer Horizontalfläche angeordnet sein. Vorzugsweise ist der Winkel in einem Bereich von 5° und 30°. Die Winkelangaben beziehen sich dabei auf den "Betrag" des eingeschlossenen spitzen Winkels, also sowohl für den Fall, dass der erste Teilbereich tiefer liegt als der Anfang des zweiten Teilbereichs sowie auch für den Fall, dass der erste Teilbereich höher liegt als der Anfang des zweiten Teilbereichs.

Gemäß einer beispielhaften Ausführungsform der erfindungsgemäßen Palettiervorrichtung umfasst die Transporteinrichtung der Gruppierstation einen ersten höhenverstellbaren Teilbereich mit einer Aufnahmeposition und/oder mit einem Verdichtungsbereich, einen zweiten Teilbereich und einen dritten Teilbereich. Der zweite Teilbereich ist dazu ausgebildet, einen Höhenunterschied zwischen dem dritten Teilbereich und dem ersten Teilbereich auszugleichen. Insbesondere ist die Neigung des zweiten Teilbereichs derart ausgebildet, dass ein Höhenunterschied zwischen dem ersten Teilbereich und einem dem zweiten Teilbereich in Transportrichtung vorgelagerten dritten Teilbereich der Transporteinrichtung ausgeglichen wird. Insbesondere bildet der zweite angleichende Teilbereich eine Transportfläche für die Stückgüter aus, die in Transportrichtung eine positive oder negative Steigung aufweist.

Hierbei kann vorgesehen sein, dass der zweite Teilbereich zum Ausgleich des Höhenunterschieds zwischen dem ersten höhenverstellbaren Teilbereich und dem dritten Teilbereich eine Arbeitsposition einnehmen kann, in welcher Arbeitsposition eine Förderebene ausgebildet ist, die in einem Winkel zwischen 1° bis 89°, insbesondere in einem Winkel zwischen 5° und 30°, gegenüber einer Horizontalen angeordnet ist und somit einen Höhenunterschied zwischen einem dritten Teilbereich und dem in der Höhe verstellten ersten Teilbereich ausgleichen kann.

Die Höhenverstellung des ersten Teilbereichs und die angleichende Einstellung im zweiten Teilbereich kann beispielsweise über Antriebe erfolgen, welche dem ersten Teilbereich und dem zweiten Teilbereich zugeordnet sind, z.B. Elektromotoren, Hydraulikzylinder oder Pneumatikzylinder.

Insbesondere kann vorgesehen sein, dass der dritte Teilbereich ständig bodennah angeordnet ist.

Insbesondere kann vorgesehen sein, dass ein Manipulator zum Drehen und/oder Verschieben von Stückgütern bodennah aufgestellt ist.

Dies hat den Vorteil, dass Fehler, z.B. in Form von umgefallenen Stückgütern, schnell behoben werden können, da Bediener den Fehler schnell bemerken und schnell eingreifen können. Bodennah in diesem Sinne bedeutet, dass eine Transportfläche im dritten Teilbereich und/oder unter oder bei dem Manipulator niedriger als 170 cm angeordnet ist, bevorzugt niedriger als 140 cm über dem Boden.

Durch eine Anpassung der Höhe des ersten Teilbereichs, von welchem ersten Teilbereich die palettierfähige Lage bzw. Stückgutlage durch die Beladeeinheit o.ä. erfasst wird, ist es möglich, den Hub der Beladeeinrichtung zu reduzieren, der notwendig ist, um die aus der Gruppierstation aufgenommene palettierfähige Lage bzw. Stückgutlage in die Ablageposition zu verbringen. Dies ist bei einem unten liegenden Zulauf insbesondere dann notwendig, wenn der Stapel an palettierfähigen Lagen bzw. Stückgutlagen bereits eine gewisse Höhe erreicht hat.

Eine Ausführungsform kann vorsehen, dass der die Aufnahmeposition umfassende erste Teilbereich der Transporteinrichtung in etwa auf die Mitte der endgültigen Höhe des zu bildenden Stapels an palettierfähigen Lagen bzw. Stückgutlagen eingestellt wird, so dass die Bewegungszeiten für die Beladeeinrichtung durch Minimierung des notwendigen Hubs möglichst gering sind.

Im Falle der vorbeschriebenen Transporteinrichtung umfassend drei Teilbereiche kann weiterhin vorgesehen sein, dass zumindest der erste Teilbereich und der zweite Teilbereich über mindestens ein Gelenk miteinander verbunden sind. Weiterhin können den Teilbereichen der Transporteinrichtung Rollen oder Räder zugeordnet sein. Aufgrund der Verstellung der Höhe des ersten Teilbereichs und der Anpassung der Neigung des zweiten Teilbereichs kann sich ein horizontaler Abstand zwischen der Transporteinrichtung der Gruppierstation und der Beladeeinrichtung ändern.

Insbesondere ist der Abstand bei einem gegenüber dem dritten Teilbereich abgesenktem oder erhöhtem ersten Teilbereich größer ausgebildet als ein Abstand, bei welchem die Transportebene des ersten Teilbereichs und die Transportebene des dritten Teilbereichs auf gleicher Höhe angeordnet sind.

Diese Veränderung des Abstands kann beispielsweise durch die Beladeeinrichtung ausgeglichen werden, in dem diese die Stückgutlage in einer entsprechend veränderten Aufnahmeposition innerhalb der Gruppierstation erfasst.

In anderen Worten kann die Beladeeinrichtung nicht nur Stückgutlagen variabel von in der Höhe unterschiedlichen Abnahmepositionen entgegennehmen, sondern zusätzlich von in der horizontalen Richtung unterschiedlichen Abnahmepositionen.

Gemäß einer alternativen Ausführungsform kann vorgesehen sein, dass die Veränderung des Abstands durch die Transporteinrichtung selbst ausgeglichen wird, indem die Aufnahmeposition relativ zum Förderband der Transporteinrichtung verschoben wird. Insbesondere bedeutet dies, dass das Förderband der Transporteinrichtung erst angehalten wird, wenn sich die palettierfähige Lage bzw. Stückgutlage relativ zum ersten Teilbereich näher an der Beladeeinrichtung befindet. Gemäß einer weiteren alternativen Ausführungsform kann ein Förderer oder Förderband des ersten, zweiten und/oder dritten Teilbereichs teleskopierbar ausgebildet sein, beispielsweise über ein teleskopartig ausziehbares Gestell und/oder eine in der Länge des Obertrums variabel einstellbare Förderfläche.

Weiterhin kann vorgesehen sein, dass ein Gestell des Förderers im ersten Teilbereich und/oder im zweiten Teilbereich auf Rollen gelagert ist, die eine Verschiebung des Förderers gegenüber dem Boden erlauben.

Weiterhin kann vorgesehen sein, dass die Gruppierstation einen auf fester Höhe angeordneten dritten Teilbereich umfasst und wobei ständig eine durchgängige Transportfläche von dem dritten Teilbereich bis hin zur Aufnahmeposition und/oder bis einschließlich des Verdichtungsbereichs bereitgestellt sein kann. D.h. bevorzugt, dass vor und nach einer Höhenverstellung jeweils Stückgüter über alle Teilbereiche der Gruppierstation hinweg bis zur Abnahmeposition transportiert werden können, bevorzugt auch während der Höhenverstellung.

Unter dem hier verwendeten Begriff der durchgängigen Transportfläche können auch solche Transportflächen verstanden werden, bei denen kleine Lücken vorhanden sind, wie sie etwa bei Bandübergängen üblich sind. Insbesondere handelt es sich hierbei um Lücken, die eine Größe aufweisen, welche geringer ist als ein halber Artikeldurchmesser.

Eine durchgängige Transportfläche kann auch Knicke und Bögen aufweisen. D.h., die Transportrichtung für die Artikel muss nicht linear sein, sondern kann sich ändernde Richtungskomponenten aufweisen.

Weiterhin kann vorgesehen sein, dass die Gruppierstation einen auf fester Höhe angeordneten dritten Teilbereich umfasst und wobei ständig eine durchgängige Transportfläche von dem dritten Teilbereich bis einschließlich des Verdichtungsbereichs, bereitgestellt sein kann.

Bevorzugt werden Stückgüter vor und nach, insbesondere auch während, einer Höhenverstellung über alle drei Teilbereiche der Gruppierstation transportiert.

Die Erfindung betrifft weiterhin ein Verfahren zum Stapeln und/oder Palettieren von palettierfähigen Stückgutlagen. Die Stückgutlagen werden in einer Gruppierstation zusammengestellt. Die in der Gruppierstation zusammengestellten Stückgutlagen werden durch eine Beladeeinrichtung erfasst. Die Beladeeinrichtung kann die Stückgutlagen direkt erfassen oder aber es kann eine Transferstation zwischen der Gruppierstation und der Beladeeinrichtung vorgesehen sein. Die Stückgutlagen werden durch die Beladeeinrichtung an einer Ablageposition an einem Ablageplatz abgesetzt.

Bei dem erfindungsgemäßen Verfahren ist vorgesehen, dass die Gruppierstation zumindest bereichsweise in ihrer Höhe verstellt werden kann, wobei eine Höhe einer Aufnahmeposition der Stückgutlage an eine Höhe einer Ablageposition am Ablageplatz angepasst wird oder wobei eine Höhe des höhenverstellbaren Bereichs der Gruppierstation an eine Höhe der Ablageposition am Ablageplatz angepasst wird.

Eine Ausführungsform kann vorsehen, dass während des laufenden Betriebs eine Anpassung der Höhe des höhenverstellbaren Bereichs der Gruppierstation erfolgt, um die Höhe der jeweiligen Aufnahmeposition jeweils relativ an die Höhe der Ablageposition anzupassen. Die Formulierung "während des laufenden Betriebs" kann bedeuten, dass sich die Höhe der Aufnahmeposition mindestens einmal pro aufzustapelnder Palette ändert, bevorzugt einmal pro aufzustapelnder Lage.

Insbesondere kann vorgesehen sein, dass die Höhe des höhenverstellbaren Bereichs der Gruppierstation im laufenden Betrieb für mindestens zwei Stückgutlagen desselben Stapels, insbesondere für jede Stückgutlage, neu eingestellt wird.

Zusätzlich oder alternativ kann vorsehen sein, dass eine Anpassung der Höhe des höhenverstellbaren Bereichs der Gruppierstation zwischen zwei Produktionsdurchläufen erfolgt, wobei eine Höhe der Palettenstapel im ersten Durchlauf niedriger oder höher ist als die im zweiten Durchlauf. Gemäß der alternativen Ausführungsform kann eine Anpassung bzw. Umstellung lediglich zwischen zwei Produktionsdurchläufen erfolgen.

Gemäß einer weiteren Ausführungsform ist vorgesehen, dass nur ein erster Teilbereich der Transporteinrichtung der Gruppierstation höhenverstellbar ausgebildet ist, von welchem Bereich die fertige Stückgutlage von oder für die Beladeeinrichtung erfasst wird. Hierbei ist eine Höhenverstellung des ersten Teilbereichs im laufenden Betrieb vorgesehen, wobei in der Mehrzahl der Arbeitsstellungen ein Höhenunterschied zwischen dem ersten Teilbereich und einem daran anschließenden zweiten Teilbereich ausgebildet ist. In diesem Fall ist vorgesehen, dass der erste Teilbereich zwischenzeitlich immer wieder auf die Höhe des zweiten Teilbereichs gebracht wird, damit die über den zweiten Teilbereich zugeführte palettierfähige Lage bzw. Stückgutlage auf den ersten Teilbereich und somit in eine Aufnahmeposition für die Beladeeinrichtung oder für eine zwischengeschaltete Transferstation überführt werden kann.

Gemäß einer weiteren bevorzugten Ausführungsform kann die Transportfläche des ersten Teilbereichs in einer Arbeitsposition gegenüber einer horizontalen Fläche in einem Winkel zwischen 1 ° und 89°, bevorzugt zwischen 5° und 30° geneneigt werden. Eine Neigung eines angrenzenden Teilbereichs ist zusätzlich optional möglich. In diesem Fall kann es je nach Überleitungsverfahren für eine Überleitung der Stückgutlage an die Beladeeinrichtung nötig sein, die Transfereinheit bzw. deren Auflagefläche im selben Winkel gegenüber der Horizontalen während der Abnahme anzuordnen. Dies ist insbesondere dann der Fall, wenn die Stückgutlage nach oben abgegriffen wird. Hierfür kann die Transfereinheit oder ihre Auflagefläche oder ihre Greifer drehbar oder schwenkbar an der Beladestation angeordnet sein. Besonders kann die Transfereinheit anstatt an der o.g. Hubsäule an einem Knickarmroboter angeordnet sein, über welchen derartige Winkel einstellbar sind.

Bei einem Überleitungsverfahren, bei dem die Transfereinheit zur Abnahme der Lage fluchtend nach dem ersten Teilbereich positioniert wird, kann eine Auflagefläche der Transfereinheit alternativ auch horizontal angeordnet bleiben. Unter Umständen kann zwischen dem ersten Teilbereich und der Transfereinheit eine kurze bogenförmige Übergangsfläche positioniert werden oder eine kurze bogenförmige Übergangsfläche kann einen Teil von dem ersten Teilbereich und/oder der Auflagefläche der Transfereinheit bilden.

Auch bei der Ausführungsform mit dem angleichenden zweiten Teilbereich kann vorgesehen sein, dass die Höhe des ersten Teilbereichs im laufenden Produktionsbetrieb mit wachsender Stapelhöhe am Ablageplatz immer weiter ansteigt, während sich der Neigungswinkel des zweiten angleichenden Teilbereichs zeitgleich immer weiter erhöht. In diesem Fall ist es nicht notwendig, die Höhe des ersten Teilbereichs zwischenzeitlich wieder abzusenken.

Ein besonderer Vorteil einer bereichsweise höhenverstellbaren Gruppierstation liegt darin, dass der notwendige Hub der Beladeeinrichtung und somit die Bewegungszeiten der Beladeeinrichtung reduziert werden, was zu einem erhöhten Durchsatz der Palettiervorrichtung führt.

Ein weiterer Vorteil besteht in der erleichterten Wartung einer bereichsweise höhenverstellbaren Transporteinrichtung der Gruppierstation. Für Reparaturen und/oder Wartungsarbeiten kann zumindest der höhenverstellbare Bereich der Transporteinrichtung, insbesondere der die Aufnahmeposition umfassende Teilbereich der Transporteinrichtung, in eine untere Position mit einer geringen Höhe verfahren werden, so dass die notwendigen Reparaturen und/oder Wartungsarbeiten in einer für den Operator angenehmen Arbeitshöhe durchgeführt werden können.

Auch kann beispielsweise bei einer Störung im Produktionsbetrieb, beispielsweise durch umgefallene Stückgüter innerhalb der palettierfähigen Lage bzw. Stückgutlage der Bediener leichter in die in eine untere Position verfahrene Transporteinrichtung eingreifen, um die umgefallenen Stückgüter wieder aufzustellen, die fehlerhafte palettierfähige Lage bzw. Stückgutlage zu entfernen o.ä.

Der erfindungsgemäße Palettierer kann vorzugsweise Bestandteil einer Getränkeverpackungsanlage sein. Eine Getränkeverpackungsanlage umfasst beispielsweise einen Nassteil mit den Komponenten Füllmodul und Verschließmodul sowie gegebenenfalls Etikettiermodul. Anschließend werden die in Flaschen oder Dosen abgefüllten Getränke zu Verpackungseinheiten zusammengefasst.

Beispielsweise werden in oder vor dem Packmodul Flaschenzusammenstellungen gebildet, die in einem Folieneinschlagmodul mit Schrumpffolie umhüllt werden. Die mit Schrumpffolie umhüllten Flaschenzusammenstellungen werden durch den Schrumpftunnel eines Schrumpfmoduls geführt. Dabei schrumpft die Schrumpffolie auf die Flaschen auf und es werden fertige Verpackungseinheiten in Form von Schrumpfgebinden erzeugt.

Die Schrumpfgebinde werden in der Gruppierstation der Palettiervorrichtung zu Stückgutlagen zusammengestellt und anschließend auf Paletten gestapelt.

Innerhalb der Getränkeverpackungsanlage werden die Flaschen über geeignete Transportsysteme, welche gegebenenfalls mit geeigneten Puffersystemen ausgestattet sind, von einem Modul zum nächsten befördert.

Die Komponenten der Getränkeverpackungsanlage sind nur beispielhaft zu verstehen. Gegebenenfalls kann vorgesehen sein, dass nicht mehrere Dosen über ein Verpackungsmittel zu einer Verkaufseinheit zusammengefasst werden, sondern dass direkt palettierfähige Lagen bzw. Stückgutlagen aus einzelnen Dosen zusammengestellt werden.

Auch kann ein anderes Verpackungsmittel als Schrumpffolie verwendet werden, in diesem Fall sind das Folieneinschlagmodul und das Schrumpfmodul durch andere geeignete Verpackungsmodule ersetzt, beispielsweise durch eine Klebegebinde-Herstellungsvorrichtung, welche einzelne Flaschen oder Dosen durch Klebepunkte unmittelbar miteinander verbindet.

Es sei an dieser Stelle ausdrücklich erwähnt, dass alle Aspekte und Ausführungsvarianten, die im Zusammenhang mit der erfindungsgemäßen Vorrichtung erläutert wurden, gleichermaßen Teilaspekte des erfindungsgemäßen Verfahrens betreffen oder sein können. Wenn daher an einer Stelle bei der Beschreibung oder auch bei den Anspruchsdefinitionen zur erfindungsgemäßen Vorrichtung von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Vorrichtung betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Vorrichtung.

Die nachfolgenden Ausführungen fassen nochmal einige Aspekte der zuvor bereits in verschiedenen Ausführungsvarianten erläuterten Erfindung zusammen, konkretisieren einige Aspekte, sollen jedoch nicht im Widerspruch zu den bereits gemachten Ausführungen gesehen werden, sondern in Zusammenschau, bei Zweifeln ggf. als speziellere Ausführungsvarianten und/oder Abwandlungen. So kann, wie bereits oben mehrfach erwähnt, die erfindungsgemäße Palettiervorrichtung für Stückgutlagen, die zumindest eine Gruppierstation, eine Beladestation sowie einen Ablageplatz umfasst, insbesondere einen Teilbereich oder Teilabschnitt einer komplexen und zahlreiche fördertechnisch miteinander kommunizierende Module aufweisenden Getränkeverpackungsanlage ausbilden, die nachfolgend anhand einer praktisch einsetzbaren Ausführungsvariante erläutert werden soll.

So kann eine solche Getränkeverpackungsanlage insbesondere einen Nassteil mit einem Dosen- und/oder Flaschenabschieber, ein Füllmodul und ein dem Füllmodul zugeordnetes Verschließmodul sowie optional ein Etikettiermodul umfassen. Zwischen dem Füllmodul und dem Ettikettiermodul kann bspw. ein Pasteur angeordnet sein.

Anschließend werden die in Dosen oder Flaschen abgefüllten Getränke zu Verpackungseinheiten zusammengefasst, nämlich durch Gruppierung und verpackungsmäßige Zusammenfassung mehrerer Dosen oder Flaschen in jeweils definierter Anzahl. Beispielsweise werden in einem Einteilmodul Zusammenstellungen gebildet, die in einem Folieneinschlagmodul mit Schrumpffolie umhüllt werden. Die mit Schrumpffolie umhüllten Zusammenstellungen werden durch den Schrumpftunnel eines Schrumpfmoduls geführt. Dabei schrumpft die Schrumpffolie auf die Flaschen auf und es werden fertige Verpackungseinheiten in Form von Schrumpfgebinden erzeugt.

Die Schrumpfgebinde können anschließend in einer erfindungsgemäß ausgebildeten Palettiervorrichtung zu Stückgutlagen zusammengestellt und palettiert werden. Innerhalb der Getränkeverpackungsanlage werden die Flaschen oder Dosen über geeignete Transportsysteme, welche ggf. mit geeigneten Puffersystemen ausgestattet sein können, von einem Modul zum nächsten befördert.

Wie erwähnt, umfasst die erfindungsgemäße Palettiervorrichtung eine Gruppierstation mit einer Transporteinrichtung, eine Beladeeinrichtung und einen Ablageplatz.

In der Gruppierstation werden die Stückgüter, beispielsweise die Schrumpfgebinde, vermittels geeigneter Portalroboter, Tripoden, Gelenkroboter oder anderer geeigneter Manipulatoren zu palettierfähigen Lagen bzw. Stückgutlagen zusammengestellt.

Die Beladeeinrichtung ist insbesondere zwischen der Transporteinrichtung der Gruppierstation und dem Ablageplatz für die zu stapelnden Stückgutlagen angeordnet. Die Beladeeinrichtung ist vorzugsweise zur Ablage der vollständigen Stückgutlagen an einer Ablageposition am Ablageplatz ausgebildet.

Gemäß einer Ausführungsform kann die Beladeeinrichtung zur Übernahme von vollständigen Stückgutlagen von der Gruppierstation und zur Ablage der vollständigen Stückgutlagen an einer Ablageposition am Ablageplatz ausgebildet sein. Beispielsweise ist die Beladeeinrichtung zur Übernahme von vollständigen Stückgutlagen von der Transporteinrichtung der Gruppierstation ausgebildet.

Eine alternative Ausführungsform kann vorsehen, dass zwischen der Gruppierstation und der Beladeeinrichtung eine Transferstation vorgesehen ist. Eine solche Transferstation kann insbesondere zur Übernahme von vollständigen Stückgutlagen von der Transporteinrichtung, zum Transport und zur Übergabe der aufgenommenen Stückgutlagen an die Beladeeinrichtung ausgebildet sein, wobei sie dafür sorgen kann, dass die jeweilige Stückgutlage durch die Beladeeinrichtung an der Ablageposition am Ablageplatz abgelegt wird.

Bei der Beladeeinrichtung handelt es sich vorzugsweise um eine mehrachsig verfahrbare Beladesäule, wie sie nachfolgend noch näher erläutert wird.

Bei der erfindungsgemäßen Palettiervorrichtung kann insbesondere vorgesehen sein, dass die Gruppierstation zumindest abschnittsweise höhenverstellbar ausgebildet ist, insbesondere dass die Transporteinrichtung der Gruppierstation zumindest abschnittsweise höhenverstellbar ausgebildet ist.

Insbesondere kann die Palettiervorrichtung dazu ausgebildet sein, eine Höhe einer Aufnahmeposition der Stückgutlage innerhalb der Gruppierstation an eine Höhe der Ablageposition am Ablageplatz anzupassen.

Die hier genannten Komponenten der Getränkeverpackungsanlage sind nur beispielhaft zu verstehen. Die erfindungsgemäße Palettiervorrichtung ist auch bei einer Getränkeverpackungsanlage einsetzbar, in welcher die Getränke in PET-Flaschen abgefüllt werden. Gegebenenfalls kann vorgesehen sein, dass nicht mehrere Dosen über ein Verpackungsmittel zu einer Verkaufseinheit zusammengefasst werden, sondern dass direkt palettierfähige Lagen bzw. Stückgutlagen aus einzelnen Dosen zusammengestellt werden.

Auch kann ein anderes Verpackungsmittel als Schrumpffolie verwendet werden, beispielsweise Karton o.ä. In diesem Fall sind das Folieneinschlagmodul und das Schrumpfmodul durch andere geeignete Verpackungsmodule ersetzt, beispielsweise durch eine Top-Clip- Anbringvorrichtung, d.h., eine Applikationsvorrichtung für das Aufbringen von oberen, die Artikel innerhalb der Zusammenstellung zusammenfassenden Verpackungszuschnitten.

In der Gruppierstation der erfindungsgemäßen Palettiervorrichtung können palettierfähige Lagen bzw. Stückgutlagen durch mindestens einen Manipulator der Gruppierstation zusammengestellt und von einer Transporteinrichtung der Gruppierstation in definierte Transportrichtung zur Beladeeinrichtung bewegt werden.

Es kann hierbei notwendig sein, dass vor der Palettierung noch Lücken zwischen den die palettierfähigen Lagen bzw. Stückgutlagen innerhalb eines Verdichtungsbereichs durch Zusammenschieben der Stückgüter zu entfernen sind. Ein solcher Verdichtungsbereich kann insbesondere einen Teilbereich der Gruppierstation darstellen, wobei vorgesehen sein kann, dass der Verdichtungsbereich durch einen Bereich der Transporteinrichtung gebildet wird.

Alternativ oder zusätzlich kann bevorzugt vorgesehen sein, dass der Verdichtungsbereich den höhenverstellbaren Bereich der Gruppierstation bildet. Es kann aber auch vorgesehen sein, dass der Verdichtungsbereich durch einen eigenen Förderbereich gebildet wird, welcher sich fluchtend an die Transporteinrichtung der Gruppierstation anschließt.

Wahlweise kann der Verdichtungsbereich einen ersten Anschlagbalken aufweisen, welcher sich quer zur Transportrichtung oberhalb der Transporteinrichtung erstreckt. Die die palettierfähigen Lagen bzw. Stückgutlagen bildenden Stückgüter werden gegen diesen ersten Anschlagbalken gefahren, wodurch eine Verdichtung der Stückgutlage in Transportrichtung stattfindet. Der Anschlagbalken kann im Anschluss an die erfolgte Verdichtung aus dem Transportweg der fertigen Stückgutlage durch Herausschwenken oder Absenken oder durch Anheben nach oben o.ä. entfernt werden.

Weiterhin kann ein zweiter Schiebebalken vorgesehen sein, der sich ebenfalls quer zur Transportrichtung erstreckt und sich an die hintere Reihe der Stückgüter der palettierfähigen Lage bzw. Stückgutlage anlegt und dadurch das Zusammenschieben der Stückgüter in Transportrichtung unterstützen kann. Der Schiebebalken kann im Anschluss an die erfolgte Verdichtung aus dem Transportweg einer nachfolgend transportierten weiteren Stückgutlage durch Herausschwenken oder Absenken oder durch Anheben nach oben o.ä. entfernt werden.

Weiterhin können im Verdichtungsbereich wahlweise zusätzliche seitlich zustellbare Verdichtungselemente vorgesehen sein, welche parallel zur Transportrichtung ausgerichtet und angeordnet sein können. Durch eine Zustellbewegung der Verdichtungselemente gegeneinander werden die Stückgüter orthogonal zur Transportrichtung zusammengeschoben.

In einer weiteren Ausführungsform kann vorgesehen sein, dass das Zusammenschieben der Stückgüter an einer Aufnahmeposition erfolgt, insbesondere im Rahmen der Übernahme der palettierfähige Lage bzw. Stückgutlage durch die Beladeeinrichtung oder beim Überführen der palettierfähige Lagen bzw. Stückgutlagen durch die Beladeeinrichtung zur Ablageposition.

Eine Ausführungsform kann vorsehen, dass der Verdichtungsbereich und die Aufnahmeposition zusammenfallen bzw. baulich und funktional integriert ausgebildet sind.

Die Ablageposition ergibt sich durch die Anzahl der bereits an dem Ablageplatz angeordneten bzw. übereinandergestapelten palettierfähige Lagen bzw. Stückgutlagen. Eine bevorzugte Ausführungsform kann vorsehen, dass die palettierfähigen Lagen bzw. Stückgutlagen auf einer am Ablageplatz bereitgestellten Palette angeordnet und insbesondere aufeinandergestapelt werden.

Wahlweise kann die Transporteinrichtung der erfindungsgemäßen Palettiervorrichtung einen ersten höhenverstellbaren Teilbereich mit einer Aufnahmeposition, einen zweiten angleichenden Teilbereich und einen dritten Teilbereich umfassen. Insbesondere kann hierbei vorgesehen sein, dass der zweite angleichende Teilbereich einen gewissen Höhenunterschied zwischen dem dritten Teilbereich der Transporteinrichtung der Gruppierstation und dem ersten Teilbereich der Transporteinrichtung der Gruppierstation ausgleicht.

Insbesondere kann hierbei vorgesehen sein, dass der zweite Teilbereich zum Ausgleich eines Höhenunterschieds eine Arbeitsposition einnehmen kann, in welcher Arbeitsposition eine Förderebene ausgebildet ist, die in einem Winkel zwischen 0° bis 50° gegenüber einer Horizontalen angeordnet ist.

Die Höhenverstellung erfolgt bei der hier beschriebenen ersten Ausführungsform beispielsweise über Hydraulikzylinder, über Pneumatikzylinder oder über andere geeignete Linearantriebe, bspw. über elektromotorisch betriebene Linearantriebe.

Die Beladeeinrichtung kann je nach Ausgestaltung oder Ausführungsvariante bspw. eine Hubsäule und einen höhenverstellbaren, horizontal ausgerichteten Querbalken aufweisen. An dem Querbalken kann bspw. eine Transfereinheit angeordnet sein, die insbesondere schiebebeweglich an dem Querbalken angeordnet sein kann. Vorzugsweise ist die Transfereinheit innerhalb einer Horizontalen schiebebeweglich ausgebildet, d.h. sie kann in horizontaler Richtung verschoben werden.

Die palettierfähigen Lagen bzw. Stückgutlagen werden jeweils an der Aufnahmeposition durch die Transfereinheit der Beladeeinrichtung aufgenommen und zur Ablageposition überführt. Hierbei wird die Transfereinheit am Querbalken in Richtung der Ablageposition bewegt. Diese lineare Bewegung kann zusätzlich durch eine Höhenverstellung des Querbalkens an der Hubsäule überlagert werden, um die Ablageposition zu erreichen.

Durch eine Anpassung der Höhe des ersten Teilbereichs verringert sich der Hub des Querbalkens, der notwendig ist, um die palettierfähige Lage bzw. Stückgutlage durch die Transfereinheit von der im ersten Teilbereich ausgebildeten Aufnahmeposition und/oder von dem im ersten Teilbereich ausgebildeten Verdichtungsbereich in die Ablageposition zu verbringen.

Die Ablageposition kann sich bspw. in einer Höhe befinden, welche höher ist als die der benötigten Ablageposition. In einem solchen Fall ist es sinnvoll, die Höhe der Aufnahmeposition entsprechend anzupassen.

Gemäß einer weiteren Ausführungsform kann vorsehen sein, dass der die Aufnahmeposition umfassende erste Teilbereich der Transporteinrichtung in etwa auf die Mitte der endgültigen Höhe des zu bildenden Stapels an palettierfähigen Lagen bzw. Stückgutlagen eingestellt wird, so dass die Bewegungszeiten für die Beladeeinrichtung möglichst gering sind, insbesondere die Horizontalverschiebung der Transfereinheit und der Vertikalhub.

Eine weitere Ausführungsform kann vorsehen, dass während des laufenden Betriebs eine Anpassung der Transporteinrichtung erfolgt, um die Höhe der Aufnahmeposition jeweils relativ an die Höhe der Ablageposition anzupassen.

Bei einer weiteren Ausführungsvariante der erfindungsgemäßen Palettiervorrichtung kann eine Verstellung der Teilbereiche der Transporteinrichtung der Gruppierstation motorisch über Gewindespindeln erfolgen, die insbesondere vermittels eines Elektromotors o. dgl. motorischer Antrieb angetrieben sein und somit in der Höhe verstellt werden können.

Zudem können die beiden Teilbereiche wahlweise über mindestens ein Gelenk miteinander verbunden sein. Außerdem können den Teilbereichen der Transporteinrichtung Rollen oder Räder zugeordnet sein. Aufgrund der Höhenverstellung ändert sich ein Abstand zwischen der Transporteinrichtung und der Beladeeinrichtung. Insbesondere kann der Abstand bei abgesenktem erstem Teilbereich größer ausfallen als der Abstand bei nicht abgesenktem erstem Teilbereich.

Diese Veränderungen des Abstandes können beispielsweise durch die Beladeeinrichtung ausgeglichen werden, indem die Transfereinheit in eine Position weiter in Richtung der Aufnahmeposition verfährt.

Gemäß einer alternativen Ausführungsform kann vorgesehen sein, dass der Abstand durch die Transporteinrichtung selbst ausgeglichen wird, indem die Aufnahmeposition relativ zum Förderband der Transporteinrichtung in die andere Richtung verschoben wird. Insbesondere bedeutet dies, dass das Förderband der Transporteinrichtung erst angehalten wird, wenn die palettierfähige Lage bzw. Stückgutlage relativ zum ersten Teilbereich weiterbefördert wurde. Nunmehr kann die palettierfähige Lage bzw. Stückgutlage in gewohnter Weise von der Transfereinheit der Beladeeinrichtung aufgenommen werden, ohne dass eine entsprechende Anpassung des Bewegungsprofils der Transfereinheit notwendig ist.

Bei einer weiteren Ausführungsvariante der erfindungsgemäßen Palettiervorrichtung kann wahlweise nur eine Höhenverstellung des ersten Teilbereichs der Transporteinrichtung der Gruppierstation vorgesehen sein, beispielsweise über eine motorische Verstellung einer Gewindespindel oder aber analog zur oben erwähnten Ausführungsform über Hydraulikzylinder, Pneumatikzylinder oder über andere geeignete Linearmotoren.

Die Verstellung erfolgt hierbei insbesondere im laufenden Betrieb, wobei der erste Teilbereich zwischenzeitlich immer wieder auf die Höhe des zweiten Teilbereichs gebracht wird, damit die über den zweiten Teilbereich zugeführte palettierfähige Lage bzw. Stückgutlage auf den ersten Teilbereich und somit in die Aufnahmeposition bzw. den Verdichtungsbereich überführt werden kann.

In allen beschriebenen Ausführungsformen kann somit die Höhe der Aufnahmeposition für eine palettierfähige Lage bzw. Stückgutlage an die Höhe der Ablageposition angepasst werden.

Ein besonderer Vorteil liegt darin, dass der notwendige Hub der Transfereinheit der Beladeeinrichtung und somit die Bewegungszeiten der Transfereinheit reduziert sind, was zu einem erhöhten Durchsatz der Palettiervorrichtung führt.

Ein weiterer Vorteil besteht in der erleichterten Wartung der Transporteinrichtung der Gruppierstation. Für Reparaturen und/oder Wartungsarbeiten kann zumindest der die Aufnahmeposition umfassende Teilbereich der Transporteinrichtung in eine untere Position mit einer geringen Höhe verfahren werden, so dass die notwendigen Reparaturen und/oder Wartungsarbeiten in einer für den Operator angenehmen Arbeitshöhe durchgeführt werden können.

Auch kann beispielsweise bei einer Störung im Produktionsbetrieb, beispielsweise durch umgefallene Stückgüter innerhalb der palettierfähigen Lage bzw. Stückgutlage durch einen Bediener leichter in eine in eine untere Position verfahrene zuführende Transporteinrichtung eingegriffen werden, um die umgefallenen Stückgüter wieder aufzustellen, die fehlerhafte palettierfähige Lage bzw. Stückgutlage zu entfernen o.ä.

In allen hier beschriebenen Ausführungsformen ist es vorzugsweise möglich, dass die Transfereinheit fluchtend hinter der Gruppierstation zur Übernahme der Stückgutlagelage angeordnet wird, also etwa auf Höhe der Transporteinrichtung und horizontal gesehen etwa an der Position, wo sich die Beladeeinrichtung bzw. Hubsäule befindet. Insbesondere kann die Transfereinheit für einen besseren Übergang minimal unterhalb der Höhe der Transporteinrichtung angeordnet werden.

Bei einer weiteren Ausführungsform einer erfindungsgemäßen Palettiervorrichtung mit zugehöriger Gruppierstation, Transporteinrichtung und höhenverstellbarem Verdichtungsbereich, einer Beladeeinrichtung und einem Ablageplatz kann außerdem vorgesehen sein, dass die Gruppierstation zwei in Transportrichtung nacheinander angeordnete Manipulatoren umfasst, gebildet beispielsweise durch Portalroboter oder Tripoden o. dgl.

Diese Manipulatoren sind in einer Weise ausgebildet und dafür ausgestattet, Stückgüter einzeln oder als Gruppen zu erfassen und in eine Position gemäß dem vorgegebenen Lagenschema für die Stückgutlage zu verbringen. Hierbei kann ein Anheben der Stückgüter und/oder ein Verschieben der Stückgüter und/oder ein Verdrehen der Stückgüter vorgesehen sein.

Insbesondere werden die Stückgüter hierbei mit einer gegenüber der Geschwindigkeit der Transporteinrichtung der Gruppierstation erhöhten Geschwindigkeit bewegt. Beim Verschieben der Stückgüter kann dies fluchtend zur Einlaufrichtung oder Transportrichtung der Stückgüter in die Gruppierstation erfolgen. Zusätzlich kann vorgesehen sein, dass die Stückgüter hierbei zusätzlich seitlich gegenüber der Einlaufrichtung oder Transportrichtung verschoben werden.

Insbesondere kann vorgesehen sein, dass die beiden Manipulatoren zur Ausbildung einer Stückgutlage zusammenarbeiten. Alternativ kann vorgesehen sein, dass die beiden Manipulatoren jeweils Stückgüter aus unterschiedlichen zuführenden Reihen erfassen und dass jeder Manipulator eine eigene Stückgutlage erstellt.

Bei dieser Ausführungsform kann zudem vorgesehen sein, dass die Gruppierstation einen Verdichtungsbereich umfasst, welcher als unabhängiger Förderbereich ausgebildet ist, was sich bereits weiter oben in Verbindung mit stellenweise anders ausgestalteten Ausführungsvarianten beschrieben findet.

Die Einstellung der Höhe des Verdichtungsbereichs kann beispielsweise über eine geeignete Steuerungseinrichtung erfolgen. Hierbei kann die Einstellung gemäß einem in der Steuerungseinrichtung bereitgestellten Programm erfolgen.

Die Steuerungseinrichtung kann insbesondere als eine nur der Palettiervorrichtung zugeordnete Steuerungseinrichtung ausgebildet sein. Alternativ hierzu kann vorgesehen sein, dass die Steuerung über eine Anlagensteuerung erfolgt, die die gesamte Getränkeverpackungsanlage oder zumindest Teilbereiche der Getränkeverpackungsanlage ansteuert.

Weiterhin kann die Palettiervorrichtung mindestens einen Sensor umfassen, der die Höhe eines aus palettierfähigen Lagen bzw. Stückgutlagen ausgebildeten Stapels an der Ablageposition erkennt, und diese Information an die Steuerungseinrichtung übermittelt, welche daraufhin eine geeignete Höhe des Verdichtungsbereichs einstellt.

Hierzu steuert die Steuerungseinrichtung vorzugsweise geeignete, dem Verdichtungsbereich zugeordnete Einstelleinrichtungen an, welche Einstelleinrichtungen beispielsweise durch die vorbeschriebenen Hydraulikzylinder oder Pneumatikzylinder oder durch die motorische Verstellung über eine Gewindespindel gebildet sind.

Die Belade- bzw. Transfereinrichtung kann beispielsweise mit einem Jalousiegreiferkopf zum Erfassen der Stückgutlage im Verdichtungsbereich und zur Ablage der Stückgutlage an der Ablageposition am Ablageplatz ausgestattet sein.

Weiterhin kann dem Ablageplatz ein Zwischenlagengreifer zugeordnet sein. Dieser ist dazu ausgebildet, flächige Zwischenlagen aus einem Vorrat zu entnehmen und jeweils nach Ablage einer Stückgutlage in der Ablageposition auf dieser anzuordnen, so dass übereinandergestapelte Stückgutlagen jeweils durch eine schützende und/oder stabilisierende Zwischenlage voneinander getrennt sind.

Bei einer weiteren Ausführungsform der erfindungsgemäßen Palettiervorrichtung kann vorgesehen sein, dass die palettierfähige Stückgutlage von dem ersten Teilbereich in die Transfereinheit der Beladeeinrichtung übergeschoben wird. D.h. die Aufnahmeposition für die Stückgutlage befindet sich nicht innerhalb des ersten Teilbereichs, sondern ist in Transportrichtung dem ersten Teilbereich fluchtend nachgeordnet.

Allgemein gesagt befindet sich die Aufnahmeposition hierbei im Bereich des ersten Teilbereichs oder in der Nähe des ersten Teilbereichs.

Die Transfereinheit kann beispielsweise eine Auflagefläche aufweisen, auf welcher Auflagefläche eine Stückgutlage während des Transports zum Stapel steht.

Die Transfereinheit kann bei dieser Ausführungsform mindestens ein Transportmittel umfassen, durch welches die Stückgutlagen relativ zu einem Gestell der Transfereinheit bewegbar sind. Das Transportmittel kann z.B. einen Schieber und/oder ein Förderband umfassen. Im Fall des Förderbandes ist die Auflagefläche gleich das Transportmittel bzw. Teil desselben.

Beispielsweise kann vorgesehen sein, dass ein Bügel der Transfereinheit hinter der Stückgutlage positioniert wird und die Stückgutlage horizontal in die Transfereinheit "hereinzieht" oder dass ein an der Gruppierstation angeordneter Schieber die Stückgutlage in die Transferstation horizontal abschiebt oder dass die Stückgutlage durch einen Förderer der Gruppierstation derart beschleunigt wird, dass sie erst wieder in der Transfereinheit zum Stehen kommt.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine Ausführungsform einer Getränkeverpackungsanlage umfassend eine erfindungsgemäße Palettiervorrichtung.
Figuren 2A und 2B zeigen eine erste Ausführungsform einer erfindungsgemäßen Palettiervorrichtung.
Figuren 3A und 3B zeigen eine zweite Ausführungsform einer erfindungsgemäßen Palettiervorrichtung.
Figuren 4A und 4B zeigen eine dritte Ausführungsform einer erfindungsgemäßen Palettiervorrichtung.
Fig. 5 zeigt eine weitere Ausführungsform einer erfindungsgemäßen Palettiervorrichtung.
Fig. 6 zeigt eine weitere Ausführungsform einer erfindungsgemäßen Palettiervorrichtung.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

Die Ausführungsformen, Beispiele und Varianten der vorhergehenden Absätze, in den Ansprüchen sowie in der nachfolgenden Figurenbeschreibung und den Figuren, einschließlich ihrer verschiedenen Ansichten oder jeweiligen individuellen Merkmale, können unabhängig voneinander oder in beliebiger Kombination verwendet werden. Merkmale, die in Verbindung mit einer Ausführungsform beschrieben werden, sind für alle Ausführungsformen anwendbar, sofern die Merkmale nicht unvereinbar sind.

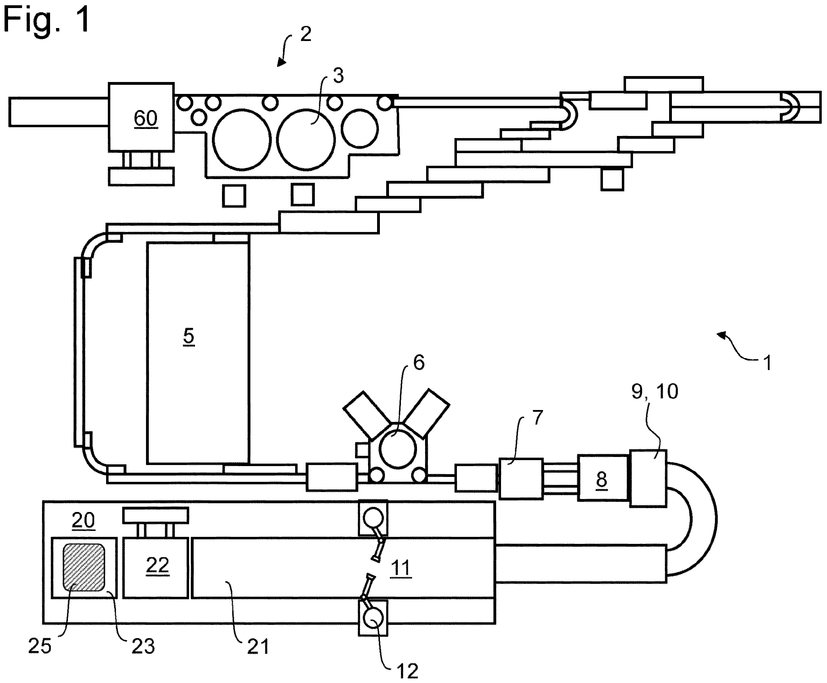

Die schematische Draufsicht der Fig. 1 zeigt eine Ausführungsvariante einer Getränkeverpackungsanlage 1, die eine erfindungsgemäße Palettiervorrichtung 20 umfasst.

Die hier beispielhaft verdeutlichte Getränkeverpackungsanlage 1 kann einen Nassteil 2 mit einem Dosen- und/oder Flaschenabschieber 60, einem Füllmodul 3 und einem dem Füllmodul 3 zugeordneten Verschließmodul sowie optional ein Etikettiermodul 6 umfassen. Zwischen dem Füllmodul 3 und dem Ettikettiermodul 6 kann ein Pasteur 5 angeordnet sein.

Anschließend werden die in Dosen oder Flaschen abgefüllten Getränke zu Verpackungseinheiten zusammengefasst. Beispielsweise werden in einem Einteilmodul 7 Zusammenstellungen gebildet, die in einem Folieneinschlagmodul 8 mit Schrumpffolie umhüllt werden. Die mit Schrumpffolie umhüllten Zusammenstellungen werden durch den Schrumpftunnel 9 eines Schrumpfmoduls 10 geführt. Dabei schrumpft die Schrumpffolie auf die Flaschen auf und es werden fertige Verpackungseinheiten in Form von Schrumpfgebinden erzeugt.

Die Schrumpfgebinde werden nachfolgend einer erfindungsgemäßen Palettiervorrichtung 20 zu Stückgutlagen zusammengestellt und palettiert. Innerhalb der Getränkeverpackungsanlage 1 werden die Flaschen über geeignete Transportsysteme, welche ggfl. mit geeigneten Puffersystemen ausgestattet sind, von einem Modul zum nächsten befördert.

Die erfindungsgemäße Palettiervorrichtung 20 umfasst eine Gruppierstation 11 mit einer Transporteinrichtung 21, eine Beladeeinrichtung 22 und einen Ablageplatz 23.

In der Gruppierstation 11 werden die Stückgüter, beispielsweise die Schrumpfgebinde, vermittels geeigneter Portalroboter 12, Tripoden, Gelenkroboter oder anderer geeigneter Manipulatoren zu palettierfähigen Lagen bzw. Stückgutlagen zusammengestellt.

Die Beladeeinrichtung 22 ist insbesondere zwischen der Transporteinrichtung 21 der Gruppierstation 11 und dem Ablageplatz 23 für die zu stapelnden Stückgutlagen angeordnet. Die Beladeeinrichtung 22 ist zur Ablage der vollständigen Stückgutlagen an einer Ablageposition 25 am Ablageplatz 23 ausgebildet.

Gemäß einer Ausführungsform ist die Beladeeinrichtung 22 zur Übernahme von vollständigen Stückgutlagen von der Gruppierstation 11 und zur Ablage der vollständigen Stückgutlagen an einer Ablageposition 25 am Ablageplatz 23 ausgebildet. Beispielsweise ist die Beladeeinrichtung 22 zur Übernahme von vollständigen Stückgutlagen von der Transporteinrichtung 21 der Gruppierstation 11 ausgebildet.

Eine alternative Ausführungsform kann vorsehen, dass zwischen der Gruppierstation 11 und der Beladeeinrichtung 22 eine Transferstation (nicht dargestellt) vorgesehen ist, welche Transferstation zur Übernahme von vollständigen Stückgutlagen von der Transporteinrichtung 21, zum Transport und zur Übergabe der aufgenommenen Stückgutlagen an die Beladeeinrichtung 22 ausgebildet ist und dass die Stückgutlage durch die Beladeeinrichtung 22 an der Ablageposition 25 am Ablageplatz 23 abgelegt wird.

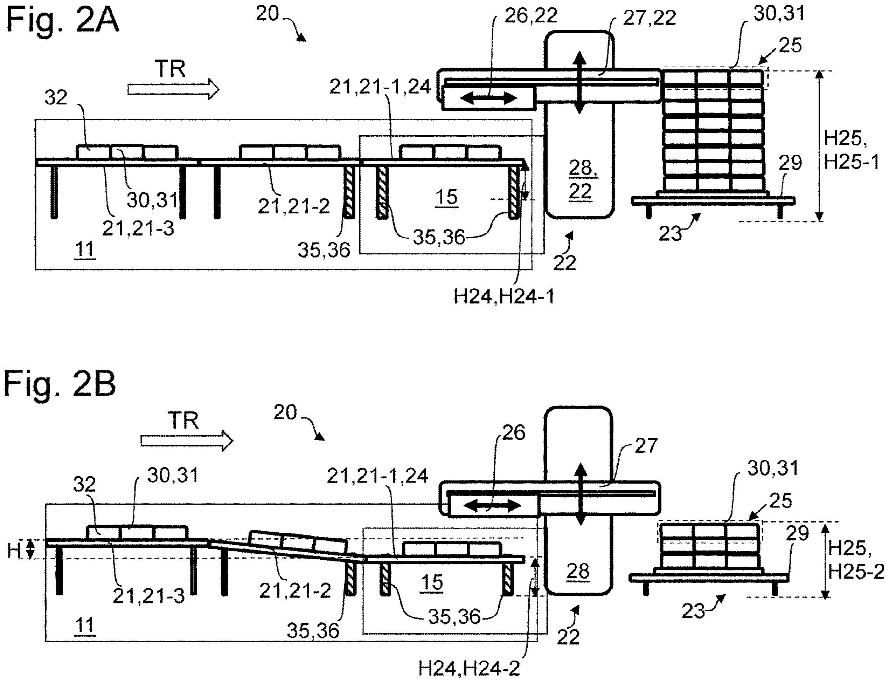

Bei der Beladeeinrichtung 22 handelt es sich vorzugsweise um eine mehrachsig verfahrbare Beladesäule, wie sie nachfolgend im Zusammenhang mit den Figuren 2 bis 5 näher dargestellt wird.

Bei der erfindungsgemäßen Palettiervorrichtung 20 ist vorgesehen, dass die Gruppierstation 11 zumindest abschnittsweise höhenverstellbar ausgebildet ist, insbesondere dass die Transporteinrichtung 21 der Gruppierstation 11 zumindest abschnittsweise höhenverstellbar ausgebildet ist.

Insbesondere ist die Palettiervorrichtung 20 dazu ausgebildet, eine Höhe einer Aufnahmeposition 24 der Stückgutlage 30 innerhalb der Gruppierstation 11 an eine Höhe der Ablageposition 25 am Ablageplatz 23 anzupassen.

Die Komponenten der Getränkeverpackungsanlage 1 sind nur beispielhaft zu verstehen. Die erfindungsgemäße Palettiervorrichtung 20 ist auch bei einer Getränkeverpackungsanlage 1 einsetzbar, in welcher die Getränke in PET-Flaschen abgefüllt werden. Gegebenenfalls kann vorgesehen sein, dass nicht mehrere Dosen über ein Verpackungsmittel zu einer Verkaufseinheit zusammengefasst werden, sondern dass direkt palettierfähige Lagen bzw. Stückgutlagen aus einzelnen Dosen zusammengestellt werden.

Auch kann ein anderes Verpackungsmittel als Schrumpffolie verwendet werden, beispielsweise Karton o.ä., in diesem Fall sind das Folieneinschlagmodul 8 und das Schrumpfmodul 10 durch andere geeignete Verpackungsmodule ersetzt, beispielsweise durch eine Top-Clip- Anbringvorrichtung, d.h., eine Applikationsvorrichtung für das Aufbringen von oberen, die Artikel innerhalb der Zusammenstellung zusammenfassenden Verpackungszuschnitten.

Die schematischen Seitenansichten der Figuren 2A und 2B zeigen eine erste Ausführungsform einer erfindungsgemäßen Palettiervorrichtung 20.

In der Gruppierstation 11 der Palettiervorrichtung 20 werden palettierfähige Lagen 30 bzw. Stückgutlagen 31 durch mindestens einen Manipulator der Gruppierstation 11 zusammengestellt und von einer Transporteinrichtung 21 der Gruppierstation 11 in Transportrichtung TR zur Beladeeinrichtung 22 bewegt.

Es kann hierbei notwendig sein, dass vor der Palettierung noch Lücken zwischen den die palettierfähigen Lagen 30 bzw. Stückgutlagen 31 innerhalb eines Verdichtungsbereichs 15 durch Zusammenschieben der Stückgüter entfernt werden müssen.

Der Verdichtungsbereich 15 stellt insbesondere einen Teilbereich der Gruppierstation 11 dar, wobei vorgesehen sein kann, dass der Verdichtungsbereich 15 durch einen Bereich der Transporteinrichtung gebildet wird. Alternativ oder zusätzlich kann bevorzugt vorgesehen sein, dass der Verdichtungsbereich 15 den höhenverstellbaren Bereich der Gruppierstation 11 bildet. Es kann aber auch vorgesehen sein, dass der Verdichtungsbereich durch einen eigenen Förderbereich gebildet wird, welcher sich fluchtend an die Transporteinrichtung 21 der Gruppierstation 11 anschließt.

Beispielsweise umfasst der Verdichtungsbereich 15 einen ersten Anschlagbalken (nicht dargestellt), welcher sich quer zur Transportrichtung TR oberhalb der Transporteinrichtung 21 erstreckt. Die die palettierfähigen Lagen 30 bzw. Stückgutlagen 31 bildenden Stückgüter 32 werden gegen diesen ersten Anschlagbalken gefahren, wodurch eine Verdichtung der Stückgutlage 31 in Transportrichtung TR stattfindet. Der Anschlagbalken kann im Anschluss an die erfolgte Verdichtung aus dem Transportweg der fertigen Stückgutlage 31 durch Herausschwenken oder Absenken oder nach oben Wegheben o.ä. entfernt werden.

Weiterhin kann ein zweiter Schiebebalken (nicht dargestellt) vorgesehen sein, der sich ebenfalls quer zur Transportrichtung TR erstreckt und sich an die hintere Reihe der Stückgüter 32 der palettierfähigen Lage 30 bzw. Stückgutlage 31 anlegt und dadurch das Zusammenschieben der Stückgüter 32 in Transportrichtung TR unterstützt. Der Schiebebalken kann im Anschluss an die erfolgte Verdichtung aus dem Transportweg einer nachfolgend transportierten weiteren Stückgutlage 31 durch Herausschwenken oder Absenken oder nach oben Wegheben o.ä. entfernt werden.

Weiterhin können im Verdichtungsbereich 15 seitlich zustellbare Verdichtungselemente (nicht dargestellt) vorgesehen sein, welche parallel zur Transportrichtung TR ausgerichtet und angeordnet sind. Durch einen Zustellbewegung der Verdichtungselemente gegeneinander, werden die Stückgüter 32 orthogonal zur Transportrichtung TR zusammengeschoben.

In einer weiteren Ausführungsform kann vorgesehen sein, dass das Zusammenschieben der Stückgüter 32 an einer Aufnahmeposition 24 erfolgt, insbesondere im Rahmen der Übernahme der palettierfähige Lage 30 bzw. Stückgutlage 31 durch die Beladeeinrichtung 22 oder beim Überführen der palettierfähige Lagen 30 bzw. Stückgutlagen 31 durch die Beladeeinrichtung 22 zur Ablageposition 25.

Eine Ausführungsform kann vorsehen, dass der Verdichtungsbereich 15 und die Aufnahmeposition 24 zusammenfallen.

Die Ablageposition 25 ergibt sich durch die Anzahl der bereits an dem Ablageplatz 23 angeordneten bzw. übereinandergestapelten palettierfähige Lagen 30 bzw. Stückgutlagen 31. Eine bevorzugte Ausführungsform kann vorsehen, dass die palettierfähige Lagen 30 bzw. Stückgutlagen 31 auf einer am Ablageplatz 23 angeordneten Palette 29 angeordnet und insbesondere aufeinandergestapelt werden.

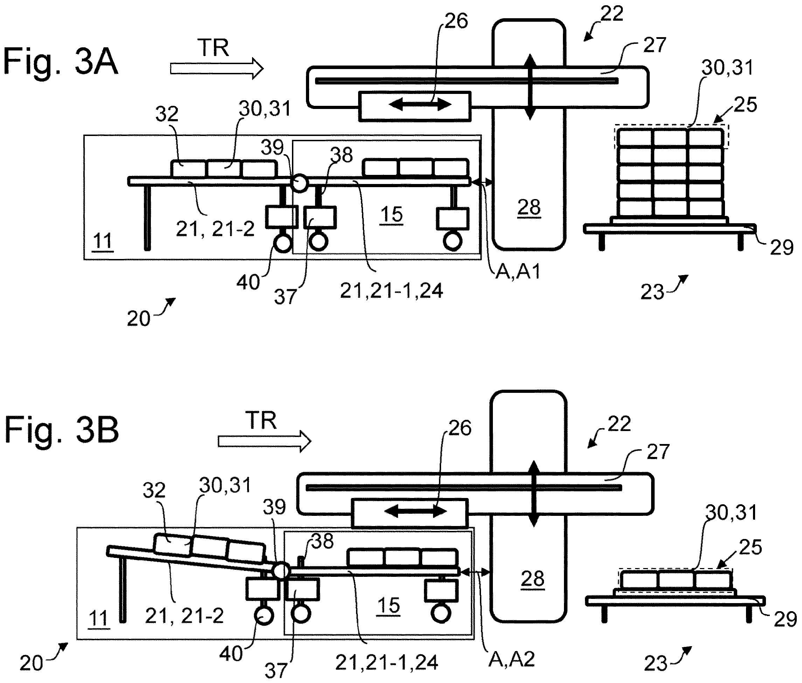

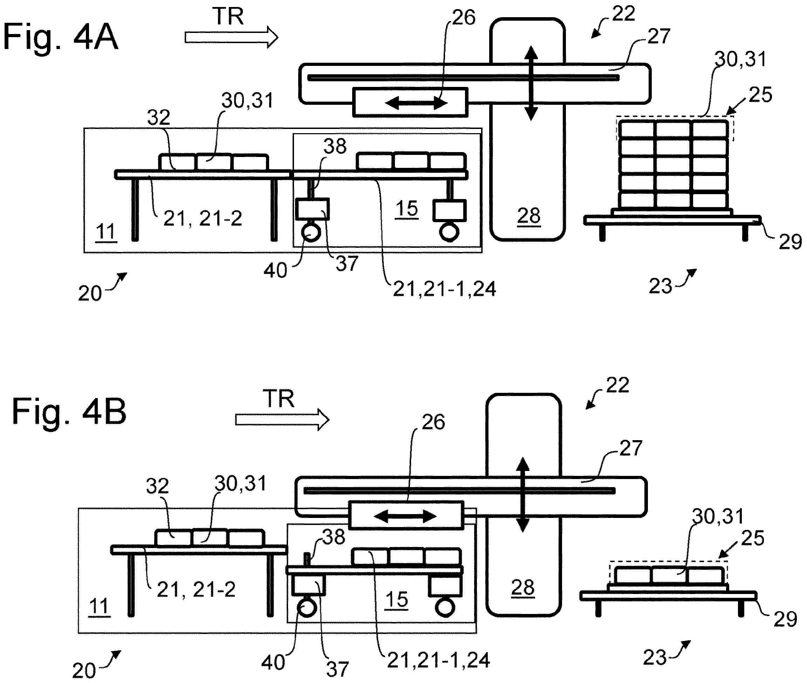

In dieser Ausführungsform und in den Figuren 3 und 4 ist der Ablageplatz 23 wegen der Übersichtlichkeit etwas weiter rechts als notwendig dargestellt. Die Transfereinheit 26 muss nach rechts nicht unbedingt auskragend abladen.

Im dargestellten Ausführungsbeispiel der Palettiervorrichtung 20 umfasst die Transporteinrichtung 21 einen ersten höhenverstellbaren Teilbereich 21-1 mit einer Aufnahmeposition 24, einen zweiten angleichenden Teilbereich 21-2 und einen dritten Teilbereich 21-3. Insbesondere ist vorgesehen, dass der zweite angleichende Teilbereich 21-2 einen Höhenunterschied H (vergleiche Fig. 2B) zwischen dem dritten Teilbereich 21-3 der Transporteinrichtung 21 der Gruppierstation 11 und dem ersten Teilbereich 21-1 der Transporteinrichtung 21 der Gruppierstation 11 ausgleicht.

Insbesondere ist hierbei vorgesehen, dass der zweite Teilbereich 21-2 zum Ausgleich eines Höhenunterschieds H, wie er in Fig. 2B dargestellt ist, eine Arbeitsposition einnehmen kann, in welcher Arbeitsposition eine Förderebene ausgebildet ist, die in einem Winkel zwischen 0° bis 50° gegenüber einer Horizontalen angeordnet ist.

Die Höhenverstellung erfolgt bei der in den Figuren 2A und 2B dargestellten ersten Ausführungsform beispielsweise über Hydraulikzylinder 35 oder Pneumatikzylinder 36.

Die Beladeeinrichtung 22 umfasst im dargestellten Ausführungsbeispiel eine Hubsäule 28 und einen höhenverstellbaren, horizontal ausgerichteten Querbalken 27. An dem Querbalken 27 ist eine Transfereinheit 26 angeordnet, die insbesondere schiebebeweglich an dem Querbalken 27 angeordnet ist. Vorzugsweise ist die Transfereinheit 26 innerhalb einer Horizontalen schiebebeweglich ausgebildet.

Die palettierfähige Lagen 30 bzw. Stückgutlagen 31 wird an der Aufnahmeposition 24 durch die Transfereinheit 26 der Beladeeinrichtung 22 aufgenommen und zur Ablageposition 25 überführt. Hierbei wird die Transfereinheit 26 am Querbalken 27 in Richtung der Ablageposition 25 bewegt. Diese lineare Bewegung kann zusätzlich durch eine Höhenverstellung des Querbalkens 27 an der Hubsäule 28 überlagert werden, um die Ablageposition 25 zu erreichen.

Wie aus dem Vergleich der Figuren 2A und 2B deutlich ersichtlich ist, verringert sich durch eine Anpassung der Höhe H24 des ersten Teilbereichs 21-1 der Hub des Querbalkens 27, der notwendig ist, um die palettierfähige Lage 30 bzw. Stückgutlage 31 durch die Transfereinheit 26 von der im ersten Teilbereich 21-1 ausgebildeten Aufnahmeposition 24 und/oder von dem im ersten Teilbereich 21-1 ausgebildeten Verdichtungsbereich 15 in die Ablageposition 25 zu verbringen.

Im Ausführungsbeispiel der Fig. 2A befindet sich die Ablageposition 25 in einer Höhe H25-1, welche höher ist als die der Ablageposition 25 gemäß Fig. 2B. Dementsprechend ist es sinnvoll, die Höhe H24 der Aufnahmeposition 24 entsprechend anzupassen.

Eine Ausführungsform kann vorsehen, dass der die Aufnahmeposition 24 umfassende erste Teilbereich 21-1 der Transporteinrichtung 21 in etwa auf die Mitte der endgültigen Höhe des zu bildenden Stapels an palettierfähigen Lagen 30 bzw. Stückgutlagen 31 einzustellen, so dass die Bewegungszeiten für die Beladeeinrichtung 22 möglichst gering sind, insbesondere die Horizontalverschiebung der Transfereinheit 26 und der Vertikalhub.

Eine weitere Ausführungsform kann vorsehen, dass während des laufenden Betriebs eine Anpassung der Transporteinrichtung 21 erfolgt, um die Höhe H24 der Aufnahmeposition 24 jeweils relativ an die Höhe H25 der Ablageposition 25 anzupassen.

Die schematischen Seitenansichten der Figuren 3A und 3B zeigen eine zweite Ausführungsform einer erfindungsgemäßen Palettiervorrichtung 20.

Es wird hierbei insbesondere auf die Unterschiede zur Ausführungsform der Figuren 2A und 2B eingegangen, auf deren Beschreibung hiermit verwiesen wird. Der dritte Teilbereich 21-3 der Transporteinrichtung 21 der Gruppierstation 11 ist zur Vereinfachung nicht dargestellt.

In diesem Fall erfolgt eine Verstellung der Teilbereiche 21-1, 21-2 der Transporteinrichtung 21 der Gruppierstation 11 motorisch über eine Gewindespindel 38, insbesondere vermittels eines Elektromotors 37 o.ä.

In den Figuren 3A und 3B ist zudem dargestellt, dass die beiden Teilbereiche 21-1 und 21-2 über mindestens ein Gelenk 39 miteinander verbunden sind. Zudem sind den Teilbereichen 21-1, 21-2 der Transporteinrichtung 21 Rollen oder Räder 40 zugeordnet. Aufgrund der Höhenverstellung ändert sich ein Abstand A zwischen der Transporteinrichtung 21 und der Beladeeinrichtung 22. Insbesondere ist der Abstand A2 bei abgesenktem ersten Teilbereich 21-1 gemäß Fig. 3B größer ausgebildet als der Abstand A1 bei nicht abgesenktem ersten Teilbereich 21-1.

Diese Veränderung des Abstand A kann beispielsweise durch die Beladeeinrichtung 22 ausgeglichen werden, in dem die Transfereinheit 26 in eine Position weiter links entsprechend der Aufnahmeposition 24 verfährt.

Gemäß einer alternativen Ausführungsform kann vorgesehen sein, dass der Abstand A durch die Transporteinrichtung 21 selbst ausgeglichen wird, indem die Aufnahmeposition 24 relativ zum Förderband der Transporteinrichtung 21 nach rechts verschoben wird. Insbesondere bedeutet dies, dass das Förderband der Transporteinrichtung 21 gemäß Fig. 3B erst angehalten wird, wenn sich die palettierfähige Lage 30 bzw. Stückgutlage 31 relativ zum ersten Teilbereich 21-1 weiter rechts befindet als bei der Ausbildung der Transporteinrichtung 21 gemäß Fig. 3A. Nunmehr kann die palettierfähige Lage 30 bzw. Stückgutlage 31 in gewohnter Weise von der Transfereinheit 26 der Beladeeinrichtung 22 aufgenommen werden, ohne dass eine entsprechende Anpassung des Bewegungsprofils der Transfereinheit 26 notwendig ist.

Die hier beschriebene Anpassung einer Abstandsveränderung zwischen der Transporteinrichtung 21 und der Beladeeinrichtung 22 ist analog auf die Ausführungsform der Figuren 2A und 2B sowie der nachfolgend beschriebenen Figuren 4A und 4B übertragbar.

Zudem zeigen die schematischen Seitenansichten der Figuren 4A und 4B eine dritte Ausführungsform einer erfindungsgemäßen Palettiervorrichtung 20.

Es wird hierbei insbesondere auf die Unterschiede zur den Ausführungsformen der Figuren 2A und 2B bzw. 3A und 3B eingegangen, auf deren Beschreibung hiermit verwiesen wird.

Bei diesem Ausführungsbeispiel erfolgt nur eine Höhenverstellung des ersten Teilbereichs 21-1 der Transporteinrichtung 21 der Gruppierstation 11, beispielsweise über eine motorische Verstellung einer Gewindespindel 38 oder aber analog zur ersten Ausführungsform der Figuren 2A und 2B über Hydraulikzylinder 35 oder Pneumatikzylinder 36.

Die Verstellung erfolgt hierbei insbesondere im laufenden Betrieb, wobei der erste Teilbereich 21-1 zwischenzeitlich immer wieder auf die Höhe des zweiten Teilbereichs 21-2 gebracht wird, damit die über den zweiten Teilbereich 21-2 zugeführte palettierfähige Lage 30 bzw. Stückgutlage 31 auf den ersten Teilbereich 21-1 und somit in die Aufnahmeposition 24 bzw. den Verdichtungsbereich 15 überführt werden kann.

In allen beschriebenen Ausführungsformen kann somit die Höhe H24 der Aufnahmeposition 24 für eine palettierfähige Lage 30 bzw. Stückgutlage 31 an die Höhe H25 der Ablageposition 25 angepasst werden.

Ein besonderer Vorteil liegt darin, dass der notwendige Hub der Transfereinheit 26 der Beladeeinrichtung 22 und somit die Bewegungszeiten der Transfereinheit 26 reduziert sind, was zu einem erhöhten Durchsatz der Palettiervorrichtung 20 führt.

Ein weiterer Vorteil besteht in der erleichterten Wartung der Transporteinrichtung 21 der Gruppierstation 11. Für Reparaturen und/oder Wartungsarbeiten kann zumindest der die Aufnahmeposition 24 umfassende Teilbereich der Transporteinrichtung 21 in eine untere Position mit einer geringen Höhe H24 verfahren werden, so dass die notwendigen Reparaturen und/oder Wartungsarbeiten in einer für den Operator angenehmen Arbeitshöhe durchgeführt werden können.

Auch kann beispielsweise bei einer Störung im Produktionsbetrieb, beispielsweise durch umgefallene Stückgüter innerhalb der palettierfähigen Lage 30 bzw. Stückgutlage 31 durch einen Bediener leichter in eine in eine untere Position verfahrene zuführende Transporteinrichtung 21 eingegriffen werden, um die umgefallenen Stückgüter wieder aufzustellen, die fehlerhafte palettierfähige Lage 30 bzw. Stückgutlage 31 zu entfernen o.ä.

In allen Ausführungsformen nach den Figuren 1 bis 4 ist es möglich, dass die Transfereinheit 26 fluchtend hinter der Gruppierstation 11 zur Übernahme der Stückgutlagelage angeordnet wird, also nach den Figuren 2 bis 3 etwa auf Höhe der Transporteinrichtung 21 und horizontal gesehen etwa an der Position, wo die Beladeeinrichtung 22 bzw. Hubsäule 28 dargestellt ist. Insbesondere kann die Transfereinheit 26 für einen besseren Übergang minimal unterhalb der Höhe der Transporteinrichtung 21 angeordnet werden.

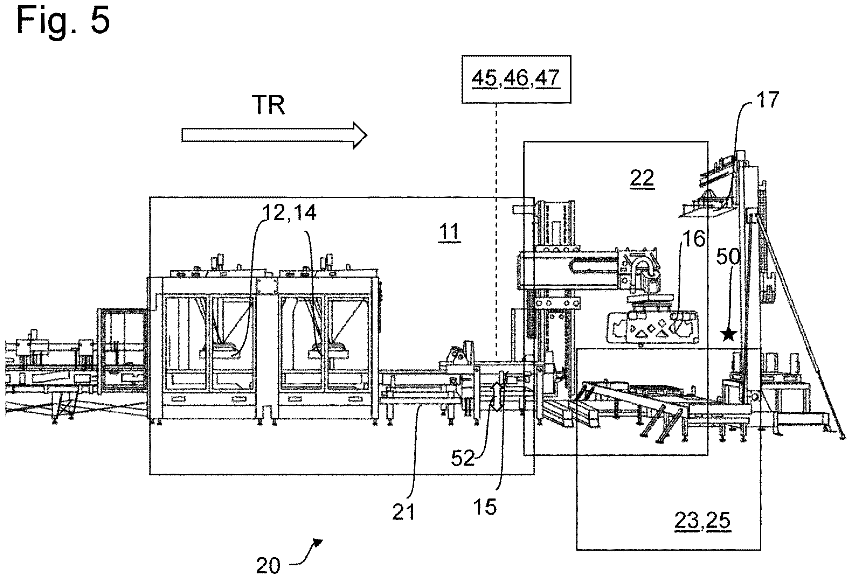

Die perspektivische Seitenansicht der Fig. 5 zeigt eine weitere Ausführungsform einer erfindungsgemäßen Palettiervorrichtung 20 umfassend eine Gruppierstation 11 mit Transporteinrichtung 21 und höhenverstellbarem Verdichtungsbereich 15, eine Beladeeinrichtung 22 und einem Ablageplatz 23.

In Bezug auf nicht genannte Bezugszeichen wird auf die Beschreibung der Ausführungsformen der Figuren 2 bis 4 verwiesen.

Die Gruppierstation 11 umfasst zwei in Transportrichtung TR nacheinander angeordnete Manipulatoren 13, beispielsweise Portalroboter oder Tripoden 14 o.ä. Die Manipulatoren 13 sind ausgestattet, Stückgüter einzeln oder als Gruppen zu erfassen und in eine Position gemäß dem vorgegebenen Lagenschema für die Stückgutlage zu verbringen. Hierbei kann ein Anheben der Stückgüter und/oder ein Verschieben der Stückgüter und/oder ein Verdrehen der Stückgüter vorgesehen sein.

Insbesondere werden die Stückgüter hierbei mit einer gegenüber der Geschwindigkeit der Transporteinrichtung 21 der Gruppierstation 11 erhöhten Geschwindigkeit bewegt. Beim Verschieben der Stückgüter kann dies fluchtend zur Einlaufrichtung oder Transportrichtung TR der Stückgüter in die Gruppierstation 11 erfolgen. Zusätzlich kann vorgesehen sein, dass die Stückgüter hierbei zusätzlich seitlich gegenüber der Einlaufrichtung oder Transportrichtung verschoben werden.

Insbesondere kann vorgesehen sein, dass die beiden Manipulatoren 13 zur Ausbildung einer Stückgutlage zusammenarbeiten. Alternativ kann vorgesehen sein, dass die beiden Manipulatoren 13 jeweils Stückgüter aus unterschiedlichen zuführenden Reihen erfassen und dass jeder Manipulator 13 eine eigene Stückgutlage erstellt.

Bei dieser Ausführungsform ist vorgesehen, dass die Gruppierstation 11 einen Verdichtungsbereich 15 umfasst, welcher als unabhängiger Förderbereich ausgebildet ist, vergleichbar mit der in den Figuren 4A und 4B beschriebenen Ausführungsform.

Die Einstellung der Höhe des Verdichtungsbereichs 15 kann beispielsweise über eine geeignete Steuerungseinrichtung 45 erfolgen. Hierbei kann die Einstellung gemäß einem in der Steuerungseinrichtung 45 bereitgestellten Programm erfolgen.

Die Steuerungseinrichtung 45 kann insbesondere als eine nur der Palettiervorrichtung 20 zugeordnete Steuerungseinrichtung 46. Alternativ kann vorgesehen sein, dass die Steuerung über eine Anlagensteuerung 47 erfolgt, die die gesamte Getränkeverpackungsanlage 1 (vergleiche Fig. 1) oder zumindest Teile der Getränkeverpackungsanlage 1 ansteuert.

Weiterhin kann die Palettiervorrichtung 20 mindestens einen Sensor 50 umfassen, der die Höhe H25 eines aus palettierfähigen Lagen 30 bzw. Stückgutlagen 31 ausgebildeten Stapels an der Ablageposition 25 erkennt (vergleiche Figuren 2), diese Information an die Steuerungseinrichtung 45 übermittelt, welche daraufhin eine geeignete Höhe H24 des Verdichtungsbereichs 15 einstellt (vergleiche Figuren 2).

Hierzu steuert die Steuerungseinrichtung 45 geeignete, dem Verdichtungsbereich 15 zugeordnete Einstelleinrichtungen 52 an, welche Einstelleinrichtungen 52 beispielsweise durch die vorbeschriebenen Hydraulikzylinder oder Pneumatikzylinder (vergleiche Figuren 2A und 2B) oder durch die motorische Verstellung über eine Gewindespindel (vergleiche Figuren 3A und 3B sowie 4A und 4B) gebildet sind.

Die Belade- bzw. Transfereinrichtung 22 ist beispielsweise mit einem Jalousiegreiferkopf 16 zum Erfassen der Stückgutlage im Verdichtungsbereich 15 und zur Ablage der Stückgutlage an der Ablageposition 25 am Ablageplatz 23 ausgestattet. Weiterhin ist dem Ablageplatz 23 ein Zwischenlagengreifer 17 zugeordnet. Dieser ist dazu ausgebildet, flächige Zwischenlagen aus einem Vorrat (nicht dargestellt) zu entnehmen und jeweils nach Ablage einer Stückgutlage in der Ablageposition 25 auf dieser anzuordnen, so dass übereinandergestapelte Stückgutlagen jeweils durch eine schützende und/oder stabilisierende Zwischenlage voneinander getrennt sind.

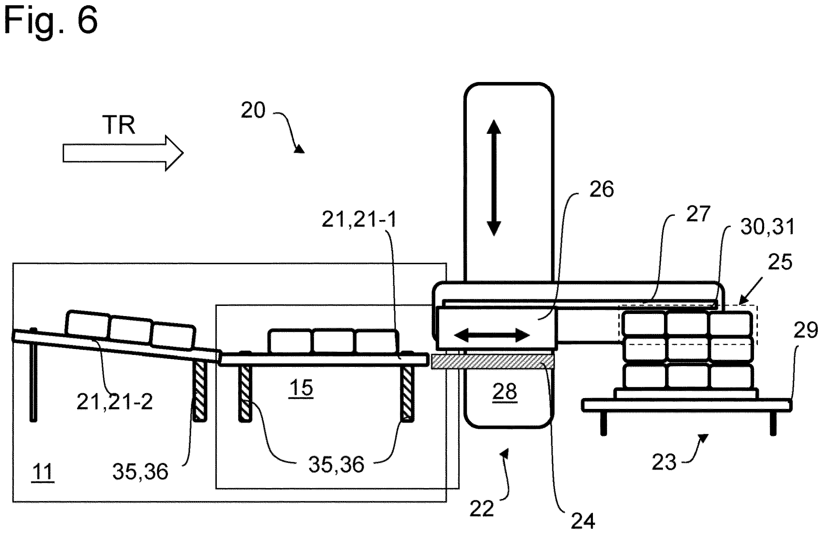

Die schematische Seitenansicht der Fig. 6 zeigt eine weitere Ausführungsform einer erfindungsgemäßen Palettiervorrichtung 20. Es wird hierbei insbesondere auf die Unterschiede zur den Ausführungsformen der Figuren 2 bis 5 eingegangen, auf deren Beschreibung hiermit verwiesen wird.

Hierbei ist vorgesehen, dass die palettierfähige Stückgutlage 31 von dem ersten Teilbereich 21-1 in die Transfereinheit 26 der Beladeeinrichtung 22 übergeschoben wird. D.h. die Aufnahmeposition 24 für die Stückgutlage 31 befindet sich nicht innerhalb des ersten Teilbereichs 21-1, sondern ist in Transportrichtung TR dem ersten Teilbereich 21-1 fluchtend nachgeordnet.

Allgemein gesagt befindet sich die Aufnahmeposition 24 im Bereich des ersten Teilbereichs 21-1 oder in der Nähe des ersten Teilbereichs 21-1. Das trifft auch auf die Ausführungsformen der Figuren 2 bis 5 zu.

Die Transfereinheit 26 kann beispielsweise eine Auflagefläche aufweisen, auf welcher Auflagefläche eine Stückgutlage 31 während des Transports zum Stapel steht.

Die Transfereinheit 26 kann bei dieser Ausführungsform mindestens ein Transportmittel umfassen, durch welches die Stückgutlagen 31 relativ zu einem Gestell der Transfereinheit 26 bewegbar sind. Das Transportmittel kann z.B. einen Schieber und/oder ein Förderband umfassen. Im Fall des Förderbandes ist die Auflagefläche gleich das Transportmittel bzw. Teil desselben.

Beispielsweise kann vorgesehen sein, dass ein Bügel der Transfereinheit 26 hinter der Stückgutlage 31 positioniert wird und die Stückgutlage 31 horizontal in die Transfereinheit "hereinzieht" oder dass ein an der Gruppierstation 11 angeordneter Schieber die Stückgutlage 31 in die Transferstation 26 horizontal abschiebt oder dass die Stückgutlage 31 durch einen Förderer der Gruppierstation 11 so beschleunigt wird, dass sie erst wieder in der Transfereinheit 26 zum Stehen kommt.

Ein abschließender Hinweis sei an dieser Stelle zu den Beschreibungen von Ausführungsvarianten der Erfindung gegeben, wobei diese Beschreibungspassagen jeweils auf die beigefügten Zeichnungen Bezug nehmen. Wenn im Zusammenhang der Figuren und deren Beschreibungen generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise der erfindungsgemäßen Vorrichtung ein besseres Verständnis für den in den Ansprüchen sowie im allgemeinen Teil der Beschreibung allgemeiner und/oder abstrakter formulierten Erfindungsgedanken abzuleiten.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Getränkeverpackungsanlage
- 2: Nassteil
- 3: Streckblasmodul
- 4: Füllmodul
- 5: Pasteur
- 6: Etikettiermodul
- 7: Einteilmodul
- 8: Folieneinschlagmodul
- 9: Schrumpftunnel
- 10: Schrumpfmodul
- 11: Gruppierstation
- 12: Portalroboter
- 15: Verdichtungsbereich
- 16: Jalousiegreiferkopf
- 17: Zwischenlagengreifer
- 20: Palettiervorrichtung
- 21: Transporteinrichtung
- 21-1: erster höhenverstellbarer Teilbereich
- 21-2: zweiter Teilbereich
- 21-3: dritter Teilbereich
- 22: Beladeeinrichtung
- 23: Ablageplatz
- 24: Aufnahmeposition
- 25: Ablageposition
- 26: Transfereinheit
- 27: Querbalken
- 28: Hubsäule
- 29: Palette
- 30: palettierfähige Lage
- 31: Stückgutlagen
- 32: Stückgut
- 35: Hydraulikzylinder
- 36: Pneumatikzylinder
- 37: Elektromotor
- 38: Gewindespindel
- 39: Gelenk
- 40: Rolle / Rad
- 45: Steuerungseinrichtung
- 46: der Palettiervorrichtung zugeordnete Steuerungseinrichtung
- 47: Anlagensteuerung
- 50: Sensor
- 52: Einstelleinrichtung
- 60: Dosen und/oder Flaschenabschieber

- A: Abstand zwischen Transporteinrichtung und Beladeeinrichtung
- A1: Abstand bei nicht abgesenktem ersten Teilbereich
- A2: Abstand bei abgesenktem ersten Teilbereich
- H: Höhenunterschied
- H24, H24-1, H24-2: Höhe der Aufnahmeposition
- H25, H25-1, H25-2: Höhe der Ablageposition

## Patentansprüche

1. Palettiervorrichtung (20) für Stückgutlagen (31) umfassend eine Gruppierstation (11), eine Beladestation (22) und einen Ablageplatz (23),
- wobei die Gruppierstation (11) zur Ausbildung einer palettierfähigen Stückgutlage (31) aus einer Mehrzahl von Stückgütern ausgebildet ist und
- wobei die Gruppierstation (11) eine Transporteinrichtung (21) mit einer Transportfläche für die Stückgüter (32) umfasst,
- wobei die Beladestation (22) zur Übernahme von vollständigen Stückgutlagen (31) von der Gruppierstation (11) und zur Ablage der vollständigen Stückgutlagen (31) an einer Ablageposition (25) am Ablageplatz (23) ausgebildet ist, und
- wobei die Gruppierstation (11) zumindest bereichsweise höhenverstellbar ausgebildet ist, insbesondere wobei die Transporteinrichtung (21) der Gruppierstation (11) zumindest bereichsweise höhenverstellbar ausgebildet ist.

2. Palettiervorrichtung (20) nach Anspruch 1, wobei die Gruppierstation (11) einen Verdichtungsbereich (15) umfasst, wobei zumindest der Verdichtungsbereich (15) höhenverstellbar ausgebildet ist.

3. Palettiervorrichtung (20) nach Anspruch 2, wobei der Verdichtungsbereich (15) dazu ausgebildet ist, die zu einer vollständigen Stückgutlagen (31) zusammengestellten Stückgüter (32) in Transportrichtung (TR) und/oder senkrecht zur Transportrichtung (TR) gegeneinander aufzustauen und/oder zu verdichten.

4. Palettiervorrichtung (20) nach einem der voranstehenden Ansprüche, wobei eine Höhe (H24) des höhenverstellbaren Bereichs der Gruppierstation (11) an eine Höhe (H25) der Ablageposition (25) am Ablageplatz (23) anpassbar ist.

5. Palettiervorrichtung (20) nach einem der voranstehenden Ansprüche, umfassend eine Steuerungseinrichtung,
welche Steuerungseinrichtung Informationen zur Bildung eines Stapels aus palettierfähigen Stückgutlagen (31) umfasst und
welche Steuerungseinrichtung dazu ausgebildet ist, mindestens eine Einstelleinrichtung zur Einstellung der Höhe des höhenverstellbaren Bereichs der Gruppierstation (11) gemäß der innerhalb der Steuerungseinrichtung abgespeicherten Informationen anzusteuern oder
wobei die Palettiervorrichtung (20) mindestens einen Sensor umfasst, welcher Sensor dazu ausgebildet ist, Daten zur Höhe eines am Ablageplatz (23) erzeugten Stapels von Stückgutlagen (31) zu erfassen und an die Steuerungseinrichtung zu übermitteln,
wobei die Steuerungseinrichtung dazu ausgebildet ist, mindestens eine Einstelleinrichtungen zur Einstellung der Höhe des höhenverstellbaren Bereichs der Gruppierstation (11) gemäß der sensorisch ermittelten Daten anzusteuern.

6. Palettiervorrichtung (20) nach Anspruch 5, wobei die mindestens eine Einstelleinrichtung als ein Hydraulikzylinder (35), als ein Pneumatikzylinder (36) oder als eine motorisch betriebene Gewindespindel (38) ausgebildet ist.

7. Palettiervorrichtung (20) nach einem der Ansprüche 2 bis 6, wobei die Transporteinrichtung (21) der Gruppierstation (11) mindestens zwei verstellbare Teilbereiche (21-1, 21-2) aufweist, insbesondere einen ersten Teilbereich (21-1) umfassend den höhenverstellbaren Bereich der Gruppierstation (11) und einen zweiten angleichenden Teilbereich (21-2), besonders bevorzugt einen insbesondere einen ersten Teilbereich (21-1) umfassend den höhenverstellbaren Verdichtungsbereich (15) und einen zweiten angleichenden Teilbereich (21-2).

8. Palettiervorrichtung (20) nach Anspruch 7, wobei der zweite angleichende Teilbereich (21-2) in mindestens einer Arbeitsposition in einer Neigung von größer 1° und kleiner 89° gegenüber einer Horizontalfläche angeordnet ist, insbesondere wobei der zweite angleichende Teilbereich (21-2) eine Transportfläche für die Stückgüter (32) und/oder Stückgutlagen (31) ausbildet, welche Transportfläche in Transportrichtung (TR) eine positive oder negative Steigung aufweist.

9. Palettiervorrichtung (20) nach einem der vorhergehenden Ansprüche, wobei die Gruppierstation (11) einen auf fester Höhe angeordneten dritten Teilbereich (21-3) umfasst und wobei ständig eine durchgängige Transportfläche von dem dritten Teilbereich bis hin zur Aufnahmeposition (24) bereitgestellt ist.

10. Verfahren zum Stapeln und/oder Palettieren von palettierfähigen Stückgutlagen (31); wobei die Stückgutlagen (31) in einer Gruppierstation (11) zusammengestellt werden, wobei die Stückgutlagen (31) durch eine Beladestation (22) erfasst und an einer Ablageposition (25) an einem Ablageplatz (23) abgesetzt werden,
- wobei die Gruppierstation (11) zumindest bereichsweise in ihrer Höhe verstellt wird, wobei eine Höhe (H24) einer Aufnahmeposition (24) der Stückgutlage (31) an eine Höhe (H25) einer Ablageposition (25) am Ablageplatz (23) angepasst wird oder
- wobei eine Höhe des höhenverstellbaren Bereichs der Gruppierstation (11) an eine Höhe der Ablageposition (25) am Ablageplatz (23) angepasst wird.

11. Verfahren nach 10, wobei die Höhe des höhenverstellbaren Bereichs der Gruppierstation (11) im laufenden Betrieb für mindestens zwei Stückgutlagen (31) desselben Stapels, insbesondere für jede Stückgutlage (31) neu eingestellt wird.

12. Verfahren nach Anspruch 10 oder 11, wobei die Höhe des höhenverstellbaren Bereichs der Gruppierstation (11) eingestellt wird, indem eine Steuerungseinrichtung mindestens eine Einstelleinrichtung ansteuert, wobei die Steuerungseinrichtung Informationen zur Stapelbildung am Ablageplatz (23) umfasst und die Einstellung der Höhe der Aufnahmeposition gemäß der abgespeicherten Informationen ansteuert oder wobei sensorisch Daten zur Höhe eines am Ablageplatz (23) erzeugten Stapels von Stückgutlagen (31) erfasst und an die Steuerungseinrichtung übermittelt werden, wobei die Steuerungseinrichtung mindestens eine Einstelleinrichtungen gemäß der sensorisch ermittelten Daten ansteuert.

13. Verfahren nach einem der Ansprüche 10 bis 12, wobei die Gruppierstation (11) eine Transporteinrichtung (21) mit einer Transportfläche für die Stückgüter (32) umfasst, wobei die Transporteinrichtung (21) mindestens zwei verstellbare Teilbereiche (21-1, 21-2) aufweist, insbesondere einen ersten Teilbereich (21-1) umfassend den höhenverstellbaren Bereich der Gruppierstation (11) und einen zweiten angleichenden Teilbereich (21-2), und wobei die Einstellung der Höhe des höhenverstellbaren Bereichs der Gruppierstation (11) durch Verstellung beider Teilbereiche (21-1, 21-2) erfolgt.

14. Verfahren nach Anspruch 13, wobei der erste Teilbereich (21-1) einen Verdichtungsbereich (15) der Gruppierstation (11) umfasst, wobei die Höhenverstellung im ersten Teilbereich (21-1) derart erfolgt, dass die Transportfläche für die Stückgüter (32) eine horizontale Fläche bildet und wobei die Höhenverstellung im zweiten Teilbereich (21-2) derart erfolgt, dass die Transportfläche für die Stückgüter (32) und/oder Stückgutlagen (31) eine gegenüber einer Horizontalen in einem Winkel zwischen 1° und 89° geneigte Fläche bildet.
